# EUROPEAN PATENT APPLICATION

(11) **EP 4 818 872 A1**
(43) Date of publication of application: **07.10.2026**
(21) Application number: 24915558.1
(22) Date of filing: 10.12.2024
(51) Int. Cl.: G06F 3/04883, G06F 3/041, G06N 20/00, G06F 3/04842, G06F 3/0354

(54) **ELECTRONIC DEVICE INCLUDING MEMO FUNCTION AND METHOD FOR OPERATING SAME**

(30) Priority: 03.01.2024 KR 20240000916; 17.01.2024 KR 20240007498
(71) Applicant: Samsung Electronics Co., Ltd., Suwon-si, Gyeonggi-do 16677 (KR)
(72) Inventor: YU, Kyungmin, Suwon-si, Gyeonggi-do 16677 (KR); KWAK, Taewon, Suwon-si, Gyeonggi-do 16677 (KR); HAN, Yonggil, Suwon-si, Gyeonggi-do 16677 (KR)
(74) Representative: HGF
(86) International application number: PCT/KR2024/020169
(87) International publication number: WO 2025/146976

(57) **Abstract**

An electronic device according to an embodiment of the present disclosure may comprise a display module, a processor, and a memory. The display module may obtain a user's handwriting through a user input in a screen display off state. The processor may control the operation of the display module. The memory may be operatively connected to the processor and may include instructions. The memory may include a first handwriting memo and a second handwriting memo related to the handwriting obtained in the screen display off state. When the instructions are executed by the processor, the electronic device may generate the first handwriting memo and the second handwriting memo related to the handwriting obtained in the screen display off state as electronic texts. When the instructions are executed by the processor, the electronic device may store the electronic texts in the memory. When the instructions are executed by the processor, the electronic device may display the electronic text on the display module simultaneously with the first handwriting memo and the second handwriting memo. Various other embodiments are also possible.

## Description

### [Technical Field]

The disclosure relates to an electronic device and an operating method thereof, capable of converting a handwriting memo in a screen-off state into an electronic text document.

### [Background Art]

Electronic devices are pursuing thin thickness, light weight, miniaturization, and multi-functionalization, and for this purpose, various components as well as a display are disposed in electronic devices. As display technology advances, research and development on electronic devices including a display (or a flexible display) are actively progressing. An electronic device may include a digitizer for converting analog coordinates (e.g., positions) of an electronic pen (e.g., a stylus pen) into digital data. A user's handwriting memo in a screen-off state of the electronic device may be obtained, and the obtained screen-off handwriting (e.g., a screen-off memo) may be displayed on a screen.

The above information may be presented as related art only to assist with an understanding of the disclosure. No determination has been made, and no assertion is made, as to whether any of the above might be applicable as prior art with regard to the disclosure.

### [Disclosure of Invention]

### [Solution to Problem]

An electronic device may provide a screen-off handwriting (e.g., a screen-off memo) function so that a user can quickly take a memo of important contents. Although the amount of words included in the screen-off handwriting (e.g., screen-off memo) is small, core keywords may be described therein. Since the screen-off handwriting (e.g., screen-off memo) is written in a short time, it may be written in an unrefined and disorganized form rather than being elaborately written.

An embodiment of the disclosure may provide a function of processing and organizing screen-off handwriting (e.g., screen-off memo) to improve user convenience.

An embodiment of the disclosure may provide an electronic device and an operating method thereof, capable of converting a handwriting memo in a screen-off state into an electronic text document and storing the electronic text document in a memory (e.g., a database, a server).

An embodiment of the disclosure may provide an electronic device and an operating method thereof, capable of converting a handwriting memo in a screen-off state into an electronic text document and displaying the electronic text document on a display.

An embodiment of the disclosure may provide an electronic device and an operating method thereof, capable of converting screen-off memos into a plurality of electronic text documents and merging the plurality of electronic text documents.

An embodiment of the disclosure may provide an electronic device and an operating method thereof, capable of converting screen-off memos into a plurality of electronic text documents and merging the plurality of electronic text documents to display the same on a display.

The technical problems to be solved by the disclosure are not limited to those mentioned above, and other technical problems not mentioned will be clearly understood from the following description by a person skilled in the art to which the disclosure pertains.

An electronic device according to an embodiment of the disclosure may include a display module, a processor, and a memory. The display module may be configured to obtain a user's handwriting via a user input in a screen-off state. The processor may be configured to control an operation of the display module. The memory may be operatively connected to the processor and include instructions. The memory may include a first handwriting memo and a second handwriting memo related to the handwriting obtained in the screen-off state. When the instructions are executed by the processor, the electronic device may be configured to generate the first handwriting memo and the second handwriting memo related to the handwriting obtained in the screen-off state as electronic texts. When the instructions are executed by the processor, the electronic device may be configured to store the electronic texts in the memory. When the instructions are executed by the processor, the electronic device may be configured to display the electronic texts simultaneously with the first handwriting memo and the second handwriting memo on the display module.

An operating method of an electronic device according to an embodiment of the disclosure may obtain a user's handwriting written on a display by a user input in a screen-off state. The operating method may convert a first handwriting memo and a second handwriting memo related to the handwriting obtained in the screen-off state into electronic texts. The operating method may store the electronic texts in the memory. The operating method may display the electronic texts simultaneously with the first handwriting memo and the second handwriting memo on the display.

In a recording medium storing instructions readable by a processor of an electronic device, the instructions may cause, when executed by the processor, the electronic device to obtain a user's handwriting written on a display by a user input in a screen-off state. The instructions may cause, when executed by the processor, the electronic device to convert a first handwriting memo and a second handwriting memo related to the handwriting obtained in the screen-off state into electronic texts. The instructions may cause, when executed by the processor, the electronic device to store the electronic texts in the memory. The instructions may cause, when executed by the processor, the electronic device to display the electronic texts simultaneously with the first handwriting memo and the second handwriting memo on the display.

An electronic device and an operating method thereof according to an embodiment of the disclosure may convert a handwriting memo in a screen-off state into an electronic text document, and store the electronic text document in a memory (e.g., a database, a server).

An electronic device and an operating method thereof according to an embodiment of the disclosure may convert a handwriting memo in a screen-off state into an electronic text document, and display the electronic text document on a display.

An electronic device and an operating method thereof according to an embodiment of the disclosure may convert screen-off memos into a plurality of electronic text documents, and merge the plurality of electronic text documents.

An electronic device and an operating method thereof according to an embodiment of the disclosure may convert screen-off memos into a plurality of electronic text documents, and merge the plurality of electronic text documents to display the same on a display.

In addition, various effects that are directly or indirectly identified through this document may be provided.

### [Brief Description of Drawings]

With regard to the description of the drawings, the same or similar reference numerals may be used for the same or similar components.
FIG. 1 is a block diagram of an electronic device in a network environment according to an embodiment of the disclosure.
FIG. 2 is a perspective view of a first surface (e.g., a front surface) of an electronic device according to an embodiment of the disclosure.
FIG. 3 is a perspective view of a second surface (e.g., a rear surface) of an electronic device according to an embodiment of the disclosure.
FIG. 4 is a block diagram illustrating a configuration of an electronic device according to an embodiment of the disclosure.
FIG. 5 is a block diagram illustrating a configuration of an electronic device according to an embodiment of the disclosure.
FIG. 6 is a diagram illustrating an operating method of an electronic device according to an embodiment of the disclosure.
FIG. 7 is a diagram illustrating storing text data (e.g., an electronic text document) in a database.
FIG. 8 is a diagram illustrating an example of learning text and writing style in an AI module.
FIG. 9 is a diagram illustrating an operating method of an electronic device according to an embodiment of the disclosure.
FIG. 10 is a diagram illustrating an operating method of an electronic device according to an embodiment of the disclosure.
FIG. 11 is a diagram illustrating an operating method of an electronic device according to an embodiment of the disclosure.
FIG. 12 is a diagram illustrating an operating method of an electronic device according to an embodiment of the disclosure.
FIG. 13 is a diagram illustrating storing screen-off handwriting (e.g., a screen-off memo) and stroke information obtained from the screen-off handwriting in a database.
FIG. 14 is a diagram illustrating recognizing words in screen-off handwriting (e.g., a screen-off memo).
FIG. 15 is a diagram illustrating recognizing lines in screen-off handwriting (e.g., a screen-off memo).
FIG. 16 is a diagram illustrating a line recognition result of screen-off handwriting (e.g., a screen-off memo).
FIG. 17 is a diagram illustrating a post-processing result of an electronic device according to an embodiment of the disclosure.
FIG. 18 is a diagram illustrating an example of using a prompt for document organization of an electronic device according to an embodiment of the disclosure.
FIG. 19 is a diagram illustrating a document organization result of an electronic device according to an embodiment of the disclosure.
FIG. 20 is a diagram illustrating a document organization result of an electronic device according to an embodiment of the disclosure.
FIG. 21 is a diagram illustrating an example of using a prompt for document merging of an electronic device according to an embodiment of the disclosure.
FIG. 22 is a diagram illustrating a document merging result of an electronic device according to an embodiment of the disclosure.
FIG. 23 is a diagram illustrating an operating method of an electronic device according to an embodiment of the disclosure.

It should be noted that throughout the drawings, the same reference numerals are used to depict the same or similar elements, features, and structures.

### [Mode for the Invention]

The following description with reference to the accompanying drawings is provided to assist in a comprehensive understanding of various embodiments of the disclosure as defined by claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and subject matter of the disclosure. In addition, descriptions of well-known functions and components may be omitted for clarity and conciseness.

The terms and words used in the following description and claims are not limited to the dictionary meanings, but are merely used by the applicant to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a", "an", and "the" include plural referents unless the context clearly dictates otherwise. Thus, for example, reference to "a component surface" includes reference to one or more of such surfaces.

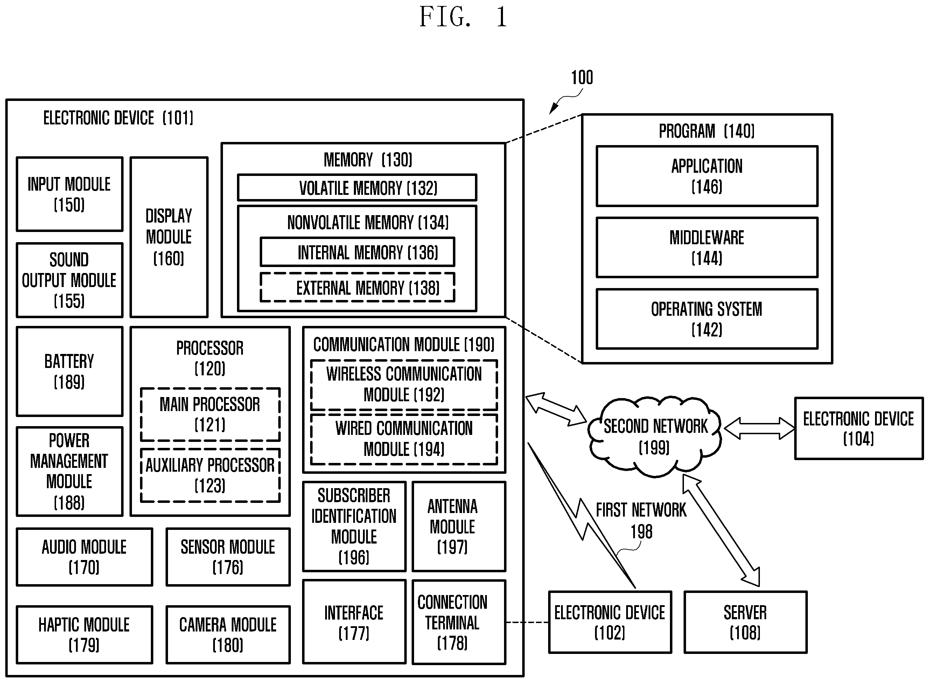

FIG. 1 is a block diagram of an electronic device in a network environment according to an embodiment of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In some embodiment, at least one (e.g., the connecting terminal 178) of the above components may be omitted from the electronic device 101, or one or more other components may be added in the electronic device 101. In some embodiment, some (e.g., the sensor module 176, the camera module 180, or the antenna module 197) of the above components may be integrated into single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, if the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102) (e.g., a speaker or a headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, an angle sensor, a gesture sensor, a gyro sensor, an atmospheric pressure sensor, a magnetic sensor (e.g., a geomagnetic sensor), an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). According to an embodiment, the connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors (ISPs), or flashes.

The power management module 188 may manage power supplied to or consumed by the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5th generation (5G) network, a next generation communication network, the Internet, or a computer network (e.g., LAN or wide area network (WAN)). These various types of communication modules may be integrated into a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4th generation (4G) network, and next-generation communication technology, e.g., new radio (NR) access technology. The NR access technology may support high-speed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate for implementing eMBB (e.g., 20 Gbps or more), loss coverage for implementing mMTC (e.g., 164 dB or less), or U-plane latency for realizing URLLC (e.g., 0.5 ms or less for each of downlink (DL) and uplink (UL) or 1 ms or less for round trip).

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to a certain embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that are disposed on or adjacent to a second surface (e.g., the top surface or the side surface) of the PCB and are capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. For example, the electronic device may include a portable communication device (e.g., a smartphone), a computer device, a portable multimedia device, a portable medical device, a camera, a wearable device, or a home appliance. However, the electronic device according to an embodiment of the disclosure is not limited to any of those described above.

An embodiment of the disclosure and the terms used herein are not intended to limit the technological features set forth herein to a particular embodiment and include various changes, equivalents, or replacements for that embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). If a certain element (e.g., a first element) is referred to, with or without the term "operatively" or "communicatively," as "coupled to/with" or "connected to/with" another element (e.g., a second element), the element may be coupled with the other element directly (e.g., wiredly), wirelessly, or via a third element.

The term "module" used in various embodiments of the disclosure may include a unit implemented in hardware, software, or firmware, or any combination thereof, and may interchangeably be used with other terms, for example, logic, logic block, component, or circuitry. A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment disclosed in this document may be provided as being included in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or a plurality of entities, and some of the plurality of entities may be separately disposed in other components. According to an embodiment, one or more of the components or operations described above may be omitted, or one or more other components or operations may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

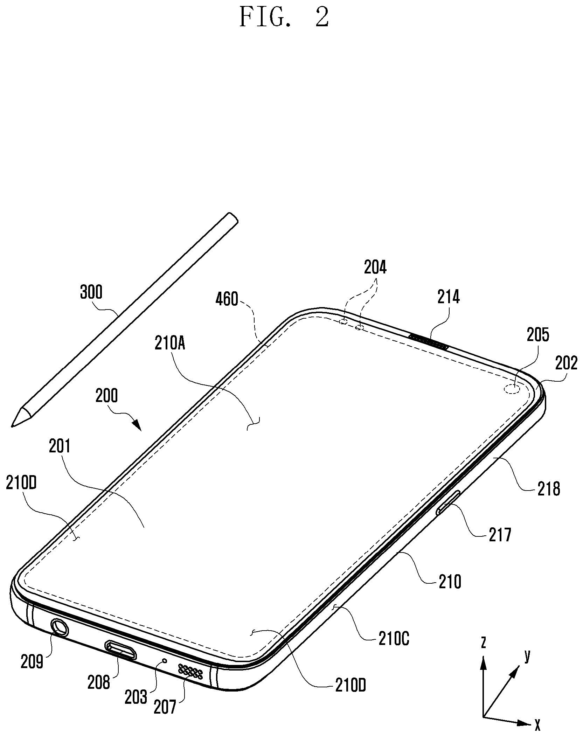

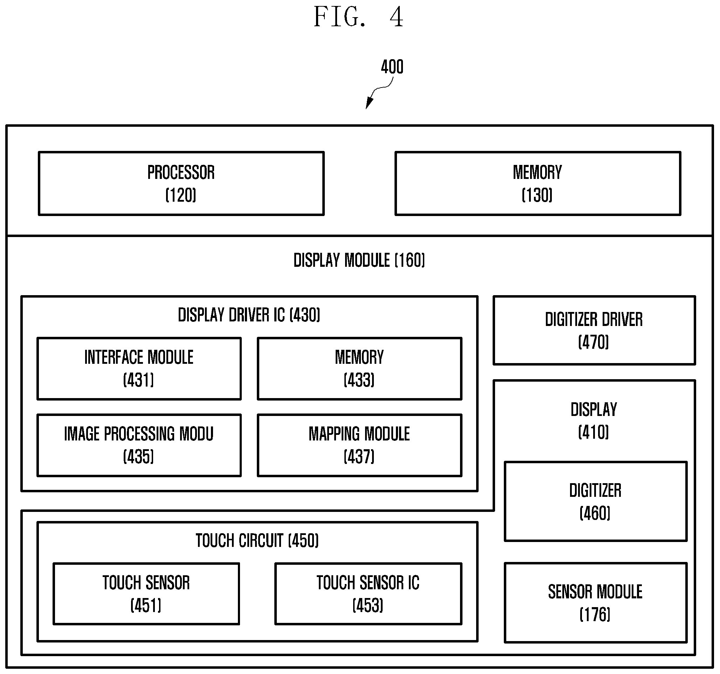

According to an embodiment, the display module 160 may include a bar-type or plate-type display (e.g., the display 201 in FIG. 2, the display 410 in FIG. 4), a display driver IC (e.g., the display driver IC 430 in FIG. 4), a touch circuit (e.g., the touch circuit 450 in FIG. 4), a digitizer (e.g., the digitizer 460 in FIGS. 2 and 4), and a digitizer driver (e.g., the digitizer driver 470 in FIG. 4).

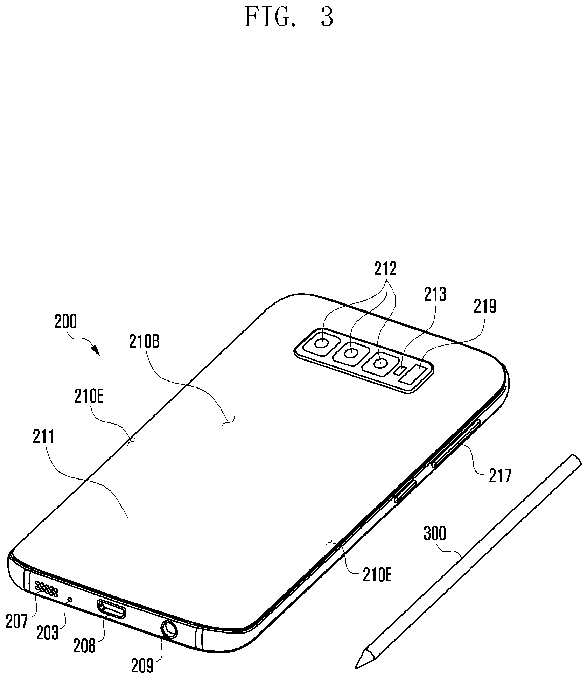

According to an embodiment, the electronic device 101 may include the display module 160 and an electronic pen (e.g., a stylus pen) (e.g., the electronic pen 300 in FIGS. 2 and 3). For example, the display module 160 may include a flexible display configured to be folded or unfolded. For example, the display module 160 may include a display (e.g., the display 410 in FIG. 4), a display driver IC (e.g., the display driver IC 430 in FIG. 4), a touch circuit (e.g., the touch circuit 450 in FIG. 4), a digitizer (e.g., the digitizer 460 in FIGS. 2 and 4), and a digitizer driver (e.g., the digitizer driver 470 in FIG. 4).

According to an embodiment, the display module 160 may include a flexible display slidably disposed to provide a screen (e.g., a display screen), a display driver IC (e.g., the display driver IC 430 in FIG. 4), a touch circuit (e.g., the touch circuit 450 in FIG. 4), a digitizer (e.g., the digitizer 460 in FIGS. 2 and 4), and a digitizer driver (e.g., the digitizer driver 470 in FIG. 4).

According to an embodiment, the display module 160 may also be referred to as a deformable display (e.g., a stretchable display), an expandable display, or a slide-out display.

FIG. 2 is a perspective view of a first surface (e.g., a front surface) of an electronic device according to an embodiment of the disclosure. FIG. 3 is a perspective view of a second surface (e.g., a rear surface) of an electronic device according to an embodiment of the disclosure.

Referring to FIGS. 2 and 3, an electronic device 200 (e.g., the electronic device 101 in FIG. 1) according to an embodiment of the disclosure may include a first surface (or a front surface) 210A, a second surface (or a rear surface) 210B, and a housing 210.

The electronic device 200 (e.g., the electronic device 101 in FIG. 1) according to an embodiment of the disclosure may include a display 201, a display driver IC (e.g., the display driver IC 430 in FIG. 4), a touch circuit (e.g., the touch circuit 450 in FIG. 4), a digitizer 460 (e.g., the digitizer 460 in FIG. 4), a digitizer driver (e.g., the digitizer driver 470 in FIG. 4), and an electronic pen 300 (e.g., a stylus pen).

According to an embodiment, the display 201 may be supported by the housing 210. For example, the display 201 may include a liquid crystal display (LCD) display, an organic light emitting diodes (OLED) display, or a micro LED display.

According to an embodiment, the housing 210 may include a side surface 210C surrounding a space between the first surface 210A and the second surface 210B. According to an embodiment, the housing 210 may refer to a structure that forms portions of the first surface 210A, the second surface 210B, and the side surfaces 210C.

According to an embodiment, the first surface 210A may be formed by a front plate 202 (e.g., a glass plate including various coating layers, or a polymer plate), at least a portion of which is substantially transparent.

According to an embodiment, the second surface 210B may be formed by a rear plate 211, which is substantially opaque. The rear plate 211 may be formed of, for example, coated or colored glass, ceramic, polymer, metal (e.g., aluminum, stainless steel (STS), or magnesium), or a combination of at least two of the above materials. However, the disclosure is not limited thereto, and the rear plate 211 may be formed of transparent glass.

According to an embodiment, the side surface 210C is coupled to the front plate 202 and the rear plate 211 and may be formed by a side bezel structure 218 (or a "side member") (or a "side frame") including metal and/or polymer.

According to an embodiment, the rear plate 211 and the side bezel structure 218 may be integrally formed and include the same material (e.g., a metallic material such as aluminum).

According to an embodiment, the front plate 202 may include two first regions 210D bent and seamlessly extending from the first surface 210A toward the rear plate 211. The two first regions 210D may be disposed at both long edges of the front plate 202.

According to an embodiment, the rear plate 211 may include two second regions 210E bent and seamlessly extending from the second surface 210B toward the front plate 202.

According to an embodiment, the front plate 202 (or the rear plate 211) may include only one of the first regions 210D (or the second regions 210E). According to an embodiment, some of the first regions 210D or the second regions 210E may not be included.

In embodiments, the side bezel structure 218, when viewed from a side of the electronic device 200, may have a first thickness (or width) at a portion where the first regions 210D or the second regions 210E are not included. In embodiments, the side bezel structure 218, when viewed from a side of the electronic device 200, may have a second thickness (or width), which is smaller than the first thickness, at a portion including the first regions 210D or the second regions 210E.

According to an embodiment, the electronic device 200 may include at least one of a display 201, an audio input device 203 (e.g., the input module 150 in FIG. 1, a microphone), audio output devices 207 and 214 (e.g., the audio output module 155 in FIG. 1, a speaker) (e.g., an audio module), sensor modules 204 and 219 (e.g., the sensor module 176 in FIG. 1), camera modules 205 and 212 (e.g., the camera module 180 in FIG. 1), a flash 213, a key input device 217, an indicator (not shown), and connectors 208 and 209.

According to an embodiment, the electronic device 200 may omit at least one (e.g., the key input device 217) of the above components or may additionally include other components.

According to an embodiment, the display 201 may be visible through the top surface of the front plate 202.

According to an embodiment, at least a portion of the display 201 may be visible through the front plate 202, which forms the first surface 210A and the first region 210D of the side surface 210C. For example, the display 201 may be coupled with a touch sensing circuit, a pressure sensor capable of measuring the intensity (pressure) of a touch, and/or a digitizer (e.g., the digitizer 460 in FIG. 4) that detects a magnetic field type electronic pen 300 (e.g., a stylus pen). For example, the display 201 may be disposed adjacent to the digitizer 460 that detects the magnetic field type electronic pen 300 (e.g., a stylus pen).

For example, a touch sensor (e.g., the touch sensor 451 in FIG. 4) may be disposed above (e.g., on an upper surface of) the display 201 along the z-axis direction. For example, the digitizer 460 may be disposed below (e.g., on a lower surface of) the display 201 along the z-axis direction.

According to an embodiment, at least a portion of the sensor modules 204 and 219 and/or at least a portion of the key input device 217 may be disposed in the first region 210D and/or the second region 210E.

According to an embodiment, at least one of a first sensor module 204, camera modules 205 and 212 (e.g., an image sensor and a driving circuit of the image sensor), an audio output device 214 (e.g., an audio module), and a fingerprint sensor may be included on a rear surface of a screen display area of the display 201.

According to an embodiment, the display 201 may be coupled with or disposed adjacent to a touch sensing circuit and a pressure sensor capable of measuring the intensity (pressure) of a touch.

According to an embodiment, the display 210 may be coupled with or disposed adjacent to the digitizer 460 that detects a magnetic field type electronic pen (e.g., a stylus pen).

According to an embodiment, at least a portion of the sensor modules 204 and 219 and/or at least a portion of the key input device 217 may be disposed in the first regions 210D and/or the second regions 210E.

According to an embodiment, the audio input device 203 may include a microphone. According to an embodiment, the input device 203 may include a plurality of microphones disposed to sense the direction of sound.

According to an embodiment, the audio output devices 207 and 214 may include an audio output device 207 operating as an external speaker and an audio output device 214 operating as a receiver for calls.

In some embodiments, the audio input device 203 (e.g., a microphone), the audio output devices 207 and 214, and the connectors 208 and 209 may be disposed in an internal space of the electronic device 200. The audio input device 203 (e.g., a microphone), the audio output devices 207 and 214, and the connectors 208 and 209 may be exposed to an external environment through at least one hole formed in the housing 210. In some embodiments, a hole formed in the housing 210 may be commonly used for the audio input device 203 (e.g., a microphone) and the audio output devices 207 and 214. In some embodiments, the audio output devices 207 and 214 may include a speaker (e.g., a piezo speaker) that operates without a hole formed in the housing 210.

According to an embodiment, the electronic pen 300 (e.g., a stylus pen) may be accommodated in an internal space of the electronic device 200. The electronic pen 300 may be inserted and disposed in a part of the space of the electronic device 200. The electronic pen 300 may be inserted (e.g., drawn in) or removed (e.g., drawn out) through a pen hole (not shown) formed in a side surface of the electronic device 200. When in use, the electronic pen 300 (e.g., a stylus pen) may be removed (e.g., drawn out) from the inside to the outside of the electronic device 200. When not in use, the electronic pen 300 (e.g., a stylus pen) may be inserted (e.g., drawn in) into the inside of the electronic device 200.

According to an embodiment, the electronic pen 300 (e.g., a stylus pen) may be attached to one surface (e.g., a front surface, a rear surface, or a side surface) of the electronic device 200 by magnetic force.

According to an embodiment, the sensor modules 204 and 219 (e.g., the sensor module 176 in FIG. 1) may generate an electrical signal or a data value corresponding to an internal operating state of the electronic device 200 or an external environmental state. The sensor modules 204 and 219 may include a first sensor module 204 (e.g., a proximity sensor) disposed on the first surface 210A of the housing 210, and/or a second sensor module 219 (e.g., an HRM sensor) disposed on the second surface 210B of the housing 210, and/or a third sensor module (not shown) (e.g., a fingerprint sensor). For example, the fingerprint sensor may be disposed on the first surface 210A (e.g., the display 201) and/or the second surface 210B of the housing 210.

The electronic device 200 may further include at least one of a gesture sensor, a gyro sensor, a barometric pressure sensor, a magnetic sensor (e.g., a geomagnetic sensor), a 6-axis sensor, an acceleration sensor, a grip sensor, a color sensor, an infrared (IR) sensor, a biometric sensor, a temperature sensor, a humidity sensor, and/or an illuminance sensor.

According to an embodiment, the camera modules 205 and 212 may include a first camera module 205 disposed on the first surface 210A of the electronic device 200, and a second camera module 212 disposed on the second surface 210B. The flash 213 may be disposed in the vicinity of the camera modules 205 and 212. The camera modules 205 and 212 may include one or a plurality of lenses, an image sensor, and/or an image signal processor. The flash 213 may include, for example, a light emitting diode (LED) or a xenon lamp.

According to an embodiment, the first camera module 205 may be disposed under a display panel of the display 201 using an under display camera (UDC) scheme. According to an embodiment, two or more lenses (wide-angle and telephoto lenses) and image sensors may be disposed on one surface of the electronic device 200. According to an embodiment, a plurality of first camera modules 205 may be disposed on the first surface (e.g., a surface on which a screen is displayed) of the electronic device 200 using the UDC scheme.

According to an embodiment, the key input device 217 may be disposed on the side surface 210C of the housing 210. According to an embodiment, the electronic device 200 may not include some or all of the above-mentioned key input devices 217, and the key input device 217 not included may be implemented in another form, such as a soft key, on the display 201. According to an embodiment, the key input device 217 may be implemented using a pressure sensor included in the display 201.

According to an embodiment, the connectors 208 and 209 may include a first connector hole 208 capable of accommodating a connector (e.g., a USB connector) for transmitting/receiving power and/or data to/from an external electronic device, and/or a second connector hole 209 (or an earphone jack) capable of accommodating a connector for transmitting/receiving an audio signal to/from an external electronic device. The first connector hole 208 may include a universal serial bus (USB) Type-A or USB Type-C port. When the first connector hole 208 supports the USB Type-C, the electronic device 200 (e.g., the electronic device 101 in FIG. 1) may support USB power delivery (PD) charging.

According to an embodiment, the first camera module 205 among the camera modules 205 and 212, and the first sensor module 204 among the sensor modules 204 and 219 may be disposed to be visible through the display 201.

According to an embodiment, when the first camera module 205 is disposed using the UDC scheme, the first camera module 205 may be invisible from the outside.

According to an embodiment, the first camera module 205 may be disposed to overlap with a display area, and a screen may also be displayed in a display area corresponding to the first camera module 205. The first sensor module 204 may be disposed in the internal space of the electronic device 200 to perform its function without being visually exposed through the front plate 202.

FIG. 4 is a block diagram illustrating a configuration of an electronic device according to an embodiment of the disclosure.

Referring to FIG. 4, an electronic device 400 (e.g., the electronic device 101 in FIG. 1, the electronic device 200 in FIG. 2) according to an embodiment of the disclosure may include a processor 120 (e.g., the processor 120 in FIG. 1), a memory 130 (e.g., the memory 130 in FIG. 1), a sensor module 176, and a display module 160 (e.g., the display module 160 in FIG. 1).

According to an embodiment, the number of processors 120 may be one or more. For example, the processor 120 may have a multi-core processor structure such as a dual-core, a quad-core, a hexa-core, or an octa-core. The processor 120 may control operations of the electronic device 101, 200, or 400 by executing instructions stored in the memory 130. For example, the processor 120 may correspond to a plurality of processors that collectively perform a plurality of operations by dividing the operations among the processors.

In an embodiment, the memory 130 (e.g., the memory 130 in FIG. 1) may include one or more of high bandwidth memory (HBM), dynamic random access memory (DRAM), static random access memory (SRAM), phase-change random access memory (PRAM), magnetic random access memory (MRAM), resistive random access memory (RRAM), flash memory, and/or electrically erasable programmable read-only memory (EEPROM).

According to an embodiment, the display module 160 (e.g., the display module 160 in FIG. 1) may include a display 410, a display driver IC (hereinafter referred to as 'DDIC') 430 (e.g., a display driver) for driving the display 410, a touch circuit 450, a digitizer 460, a digitizer driver 470, and a sensor module 176 (e.g., the sensor module 176 in FIG. 1). For example, all or part of the sensor module 176 may be included in the display module 160.

According to an embodiment, the DDIC 430 may include an interface module 431 (e.g., an interface circuit), a memory 433 (e.g., a buffer memory), an image processing module 435 (e.g., an image processing circuit), or a mapping module 437 (e.g., a mapping circuit).

According to an embodiment, the DDIC 430 may receive image information including image data or an image control signal corresponding to a command for controlling the image data from other components of the electronic device (e.g., the electronic device 101 in FIG. 1, the electronic device 200 in FIGS. 2 and 3) through the interface module 431.

According to an embodiment, the image information may be received from the processor 120 (e.g., the processor 120 in FIG. 1) (e.g., the main processor 121 in FIG. 1) (e.g., an application processor) or an auxiliary processor (e.g., the auxiliary processor 123 in FIG. 1) (e.g., a graphic processing unit) that operates independently of the function of the main processor 121.

According to an embodiment, the DDIC 430 may communicate with the touch circuit 450 or the sensor module 176 through the interface module 431. In addition, the DDIC 430 may store at least part of the received image information in the memory 433. As an example, the DDIC 430 may store at least part of the received image information in the memory 433 in frame units.

According to an embodiment, the image processing module 435 may perform pre-processing or post-processing (e.g., resolution, brightness, or size adjustment) on at least part of the image data based at least on characteristics of the image data or characteristics of the display 410.

According to an embodiment, the mapping module 437 may generate a voltage value or a current value corresponding to the image data pre-processed or post-processed by the image processing module 435. According to an embodiment, the generation of the voltage value or the current value may be performed based at least in part on properties of pixels of the display 410 (e.g., an arrangement of pixels (RGB stripe or pentile structure), or a size of each of sub-pixels).

According to an embodiment, at least some pixels of the display 410 are driven, for example, based at least in part on the voltage value or the current value, whereby visual information (e.g., text, image, or icon) corresponding to the image data may be displayed through the display 410.

According to an embodiment, the touch circuit 450 may include a touch sensor 451 and a touch sensor IC (integrated circuit) 453 for controlling the touch sensor 451.

According to an embodiment, the touch sensor IC 453 may control the touch sensor 451 to sense a touch input or a hovering input at a specific position of the display 410. For example, the touch sensor IC 453 may sense the touch input or the hovering input by measuring a change in a signal (e.g., voltage, light amount, resistance, or charge amount) at a specific position of the display 410. The touch sensor IC 453 may provide information (e.g., position, area, pressure, or time) regarding the sensed touch input or hovering input to the processor (e.g., the processor 120 in FIG. 1).

According to an embodiment, at least part of the touch circuit 450 (e.g., the touch sensor IC 453) may be included as part of the DDIC 430 or the display 410.

According to an embodiment, at least part of the touch circuit 450 (e.g., the touch sensor IC 453) may be included as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176, or a control circuit therefor. In this case, the at least one sensor or the control circuit therefor may be embedded in a part of the display module 160 (e.g., the display 410 or the DDIC 430) or a part of the touch circuit 450.

For example, in the case where the sensor module 176 embedded in the display module 160 includes a biometric sensor (e.g., a fingerprint sensor), the biometric sensor may obtain biometric information (e.g., a fingerprint image) associated with a touch input through a partial area of the display 410.

For example, in the case where the sensor module 176 embedded in the display module 160 includes a pressure sensor, the pressure sensor may obtain pressure information associated with a touch input through a partial or entire area of the display 410.

According to an embodiment, the touch sensor 451 or the sensor module 176 may be disposed between pixels of a pixel layer of the display 410, or above or below the pixel layer.

According to an embodiment, the display module 160 may include the digitizer 460 for detecting an input (e.g., a touch input or a hovering input) of the electronic pen 300 (e.g., a stylus pen). For example, the digitizer 460 may convert analog coordinates (e.g., a position) of the electronic pen 300 (e.g., a stylus pen) into digital coordinate data. The digitizer 460 may transfer the digital coordinate data to the processor 120 and/or the DDIC 430.

According to an embodiment, the processor 120 may obtain digital coordinate data input from the digitizer 460. The processor 120 may detect an input (e.g., a touch input or a hovering input) through the electronic pen 300 (e.g., a stylus pen) based on the digital coordinate data. For example, the digitizer 460 may include a plurality of x-axis channels and a plurality of y-axis channels. The processor 120 may sense a position of the electronic pen 300 (e.g., a stylus pen) using sensing signals (e.g., EMR signals) received from the x-axis channels and the y-axis channels disposed in the digitizer 460. For example, in the digitizer 460, the plurality of x-axis channels and the plurality of y-axis channels may be sequentially arranged, and the processor 120 may sense the position of the electronic pen 300 (e.g., a stylus pen) using sensing signals (e.g., EMR signals) received from three consecutive channels (e.g., three adjacent channels).

According to an embodiment, the digitizer 460 may be invisible from the outside due to the display 410, electronic components, and mechanical structures.

For example, the digitizer 460 may be integrally disposed with the plate-type display 410 or may be disposed adjacent to the plate-type display 410. For example, when the digitizer 460 is applied to the plate-type display 410, the digitizer 460 may include one electro magnetic resonance (EMR) sheet (or an EMR film). A plurality of x-axis channels and a plurality of y-axis channels for detecting the position of the electronic pen 300 may be disposed on one EMR sheet.

For example, the digitizer 460 may be integrally disposed with a flexible display or a foldable display, or may be disposed adjacent to the flexible display or the foldable display. For example, the digitizer 460 may be disposed below (e.g., on a lower surface of) the display 410 (e.g., the display 201 in FIGS. 2 and 3) along the z-axis direction (e.g., the z-axis direction in FIGS. 2 and 3).

For example, when the digitizer 460 is applied to the flexible display or the foldable display, the digitizer 460 may include a plurality of EMR sheets (or EMR films). A plurality of x-axis channels and a plurality of y-axis channels for detecting the position of the electronic pen 300 may be disposed on the plurality of EMR sheets.

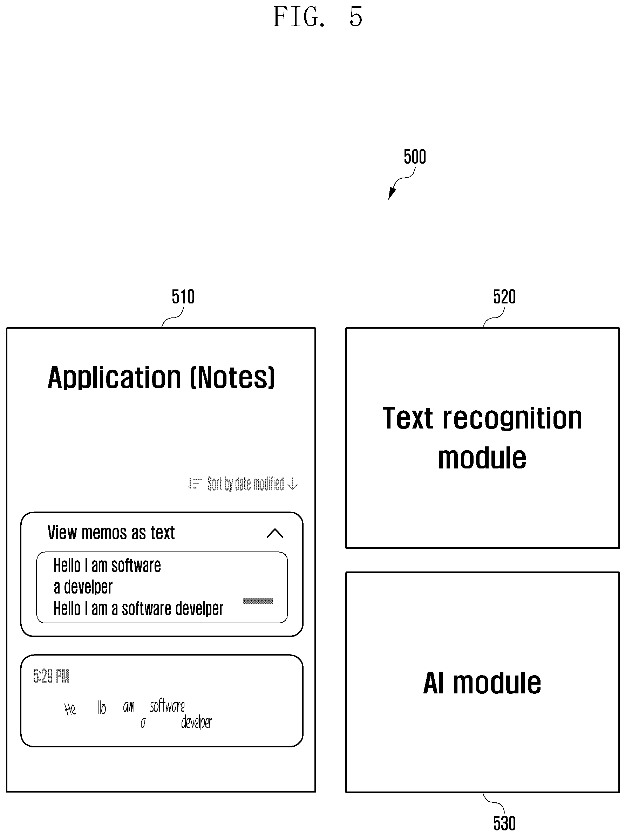

FIG. 5 is a block diagram illustrating a configuration of an electronic device according to an embodiment of the disclosure.

In a screen-off state (e.g., a state in which a screen is turned off) of an electronic device 500 according to an embodiment, a user may generate handwriting using an electronic pen (e.g., the electronic pen 300 in FIGS. 2 and 3). In the disclosure, contents (e.g., information) written in handwriting in the screen-off state may be defined as screen-off handwriting (e.g., a screen-off memo).

Referring to FIG. 5, the electronic device 500 (e.g., the electronic device 101 in FIG. 1, the electronic device 200 in FIGS. 2 and 3, the electronic device 400 in FIG. 4) according to an embodiment of the disclosure may include an application 510 (e.g., a note application, a note program, a memo application, or a memo program), a text recognition module 520 (e.g., a character recognition circuit, a handwriting recognition circuit, or a document recognition circuit), and an artificial intelligence (AI) module 530 (e.g., a generative AI circuit).

For example, the application 510 may display a user interface (UI) on a display (e.g., the display 201 in FIG. 2, the display 410 in FIG. 4). The application 510 may display information (e.g., handwriting information, text information, or a note screen) through the UI.

For example, the text recognition module 520 may recognize a user's screen-off handwriting (e.g., a screen-off memo). The text recognition module 520 may convert recognized contents (e.g., a handwriting object, handwriting information, a character object, or character information) from the handwriting (e.g., the screen-off memo) recognized in the screen-off state into electronic text or an electronic document.

For example, the AI module 530 may learn text (e.g., electronic text or an electronic document) obtained from the user's screen-off handwriting (e.g., the screen-off memo) and the user's writing style.

According to an embodiment, the application 510, the text recognition module 520, and the AI module 530 may be embedded in a processor (e.g., the processor 120 in FIG. 4) to operate.

According to an embodiment, at least some of the application 510, the text recognition module 520, and the AI module 530 may be embedded in the processor 120 to operate.

For example, the application 510 and the text recognition module 520 may be embedded in the processor 120 to operate, and the AI module 530 may be disposed outside the processor 120 to operate.

For example, the AI module 530 may be embedded in the electronic device 500 (e.g., the electronic device 400 in FIG. 4). For example, the AI module 530 may be disposed in an external electronic device and connected to the electronic device 500 through a network (e.g., the first network 198 or the second network 199 in FIG. 1). The external electronic device in which the AI module 530 is disposed may be at least one of the electronic device 102, the electronic device 104, or the server 108 (e.g., an AI server) in FIG. 1.

The electronic device 500 according to an embodiment may obtain screen-off handwriting (e.g., a screen-off memo) in the screen-off state (e.g., the state in which the screen is turned off). For example, the electronic device 500 may provide a text conversion menu (e.g., a text conversion function) for converting the screen-off handwriting (e.g., the screen-off memo) into text (e.g., electronic text or an electronic document). The user may request conversion of the screen-off handwriting (e.g., the screen-off memo) into text (e.g., electronic text or an electronic document) by selecting the text conversion menu (e.g., the text conversion function).

For example, the electronic device 500 may obtain stroke information from the screen-off handwriting (e.g., the screen-off memo). Using the stroke information, the electronic device 500 may convert the screen-off handwriting (e.g., the screen-off memo) into text (e.g., electronic text or an electronic document) and store the same.

For example, the electronic device 500 may correct errors in typos, spacing, word order, or grammar in the text (e.g., electronic text or an electronic document).

For example, when a plurality of texts (e.g., electronic texts or electronic documents) are written in a designated format (e.g., e-mail, phone number, or address), the electronic device 500 may merge the plurality of texts written in the designated format to generate and store one text (e.g., electronic text or an electronic document).

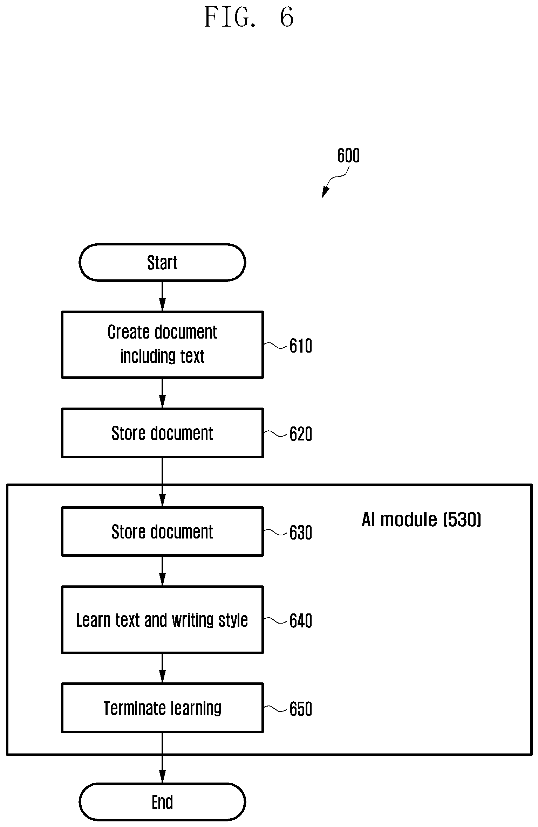

FIG. 6 is a diagram illustrating an operating method of an electronic device according to an embodiment of the disclosure.

Referring to FIGS. 5 and 6, in operation 610, the electronic device 500 (e.g., the electronic device 400 in FIG. 4) may obtain screen-off handwriting (e.g., a screen-off memo) in a screen-off state (e.g., a state in which a screen is turned off). The electronic device 500 may obtain stroke information from the screen-off handwriting (e.g., the screen-off memo). The electronic device 500 may convert the screen-off handwriting (e.g., the screen-off memo) into text (e.g., electronic text or an electronic document) using the stroke information, and may create (e.g., generate) a document (e.g., an electronic document) including the text.

For example, in operation 610, the processor (e.g., the processor 120 in FIG. 4) may obtain screen-off handwriting (e.g., a screen-off memo) in a screen-off state (e.g., a state in which the screen is turned off). The processor 120 may obtain stroke information from the screen-off handwriting (e.g., the screen-off memo). The processor 120 may convert the screen-off handwriting (e.g., a screen-off memo) into text (e.g., electronic text or an electronic document) using the stroke information, and may create (e.g., generate) a document (e.g., an electronic document) including the text.

For example, in operation 610, the text recognition module 520 may obtain screen-off handwriting (e.g., a screen-off memo) in a screen-off state (e.g., a state in which the screen is turned off). The text recognition module 520 may obtain stroke information from the screen-off handwriting (e.g., the screen-off memo). The text recognition module 520 may convert the screen-off handwriting (e.g., a screen-off memo) into text (e.g., electronic text or an electronic document) using the stroke information, and may create (e.g., generate) a document (e.g., an electronic document) including the text.

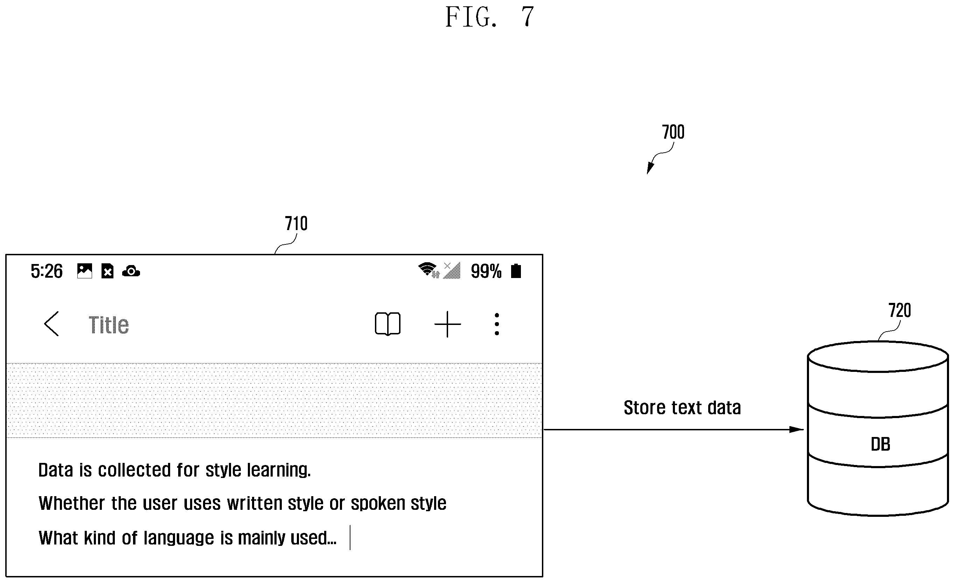

According to an embodiment, in operation 620, the electronic device 500 may store the document (e.g., the electronic document) including the text in a database (e.g., the database 720 in FIG. 7 or the memory 130 in FIG. 4). However, the disclosure is not limited thereto, and the electronic device 500 may store the document (e.g., the electronic document) including the text in an external electronic device or an external server (e.g., an AI server).

For example, in operation 620, the processor 120 may store the document (e.g., the electronic document) including the text in a database (e.g., the database 720 in FIG. 7 or the memory 130 in FIG. 4). However, the disclosure is not limited thereto, and the processor 120 may store the document (e.g., the electronic document) including the text in an external electronic device or an external server (e.g., an AI server).

For example, in operation 620, the application 510 or the text recognition module 520 may store the document (e.g., the electronic document) including the text in a database (e.g., the database 720 in FIG. 7 or the memory 130 in FIG. 4). However, the disclosure is not limited thereto, and the application 510 or the text recognition module 520 may store the document (e.g., the electronic document) including the text in an external electronic device or an external server (e.g., an AI server).

According to an embodiment, in operation 630, the electronic device 500 may start learning of the document (e.g., the electronic text or the electronic document) including the text.

For example, in operation 630, the processor 120 may start learning of the document (e.g., the electronic text or the electronic document) including the text.

For example, in operation 630, the AI module 530 may start learning of the document (e.g., the electronic text or the electronic document) including the text.

According to an embodiment, in operation 640, the electronic device 500 may learn the document (e.g., the electronic text or the electronic document) including the text obtained from the user's screen-off handwriting (e.g., the screen-off memo), and learn the user's writing style.

For example, in operation 640, the processor 120 may learn the document (e.g., the electronic text or the electronic document) including the text obtained from the user's screen-off handwriting (e.g., the screen-off memo), and learn the user's writing style.

For example, in operation 640, the AI module 530 may learn the document (e.g., the electronic text or the electronic document) including the text obtained from the user's screen-off handwriting (e.g., the screen-off memo), and learn the user's writing style.

According to an embodiment, in operation 650, the electronic device 500 may terminate learning of the document (e.g., the electronic text or the electronic document) including the text, and of the user's writing style.

For example, in operation 650, the processor 120 may terminate learning of the document (e.g., the electronic text or the electronic document) including the text, and of the user's writing style.

In operation 650, the AI module 530 may terminate learning of the document (e.g., the electronic text or the electronic document) including the text, and of the user's writing style.

According to an embodiment, the memory (e.g., the memory 130 in FIG. 4) may include (e.g., store) instructions for the electronic device 500 to perform operations 610 to 650 in FIG. 6.

According to an embodiment, the memory (e.g., the memory 130 in FIG. 4) may include (e.g., store) instructions for the processor 120 to perform operations 610 to 650 in FIG. 6.

According to an embodiment, the memory (e.g., the memory 130 in FIG. 4) may include (e.g., store) instructions for the application 510 to perform operations 610 to 650 in FIG. 6.

According to an embodiment, the memory (e.g., the memory 130 in FIG. 4) may include (e.g., store) instructions for the text recognition module 520 to perform operations 610 to 650 in FIG. 6.

According to an embodiment, the memory (e.g., the memory 130 in FIG. 4) may include (e.g., store) instructions for the AI module 530 to perform operations 610 to 650 in FIG. 6.

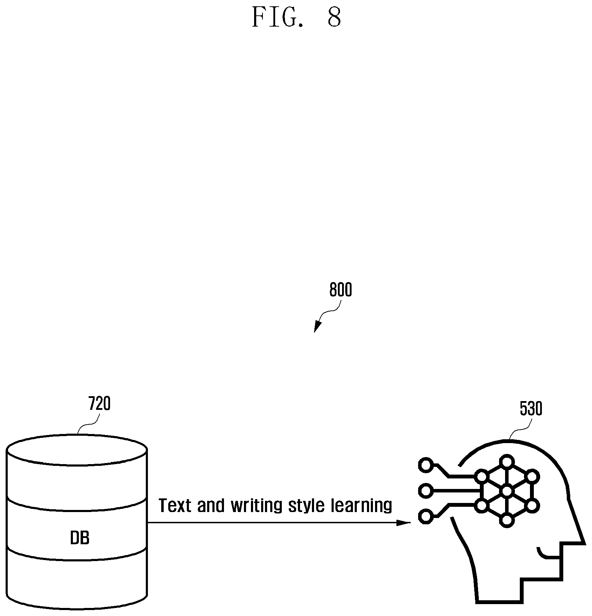

FIG. 7 is a diagram 700 illustrating storing text data (e.g., an electronic text document) in a database. FIG. 8 is a diagram 800 illustrating an example of learning text and writing style in an AI module.

Referring to FIGS. 5, 7, and 8, according to an embodiment, an electronic device (e.g., the electronic device 400 in FIG. 4 or the electronic device 500 in FIG. 5) may create (e.g., generate) a document (e.g., electronic text or an electronic document) including text. For example, the electronic device 500 may store the document (e.g., the electronic text or the electronic document) including the text in a database 720 (e.g., the memory 130 in FIG. 4). However, the disclosure is not limited thereto, and the electronic device 500 may store the document (e.g., the electronic document) including the text in an external electronic device or an external server (e.g., an AI server).

According to an embodiment, the electronic device 500 may collect text information used by a user to determine a written style or a spoken style used by the user. The electronic device 500 may collect the text information used by the user to determine which language is mainly used by the user. The electronic device 500 may display a user interface 710 on a display (e.g., the display 410 in FIG. 4) to guide the collection of the text information used by the user.

According to an embodiment, the electronic device 500 may learn the document (e.g., the electronic text or the electronic document) including the text, and the user's writing style, in order to personalize and supplement information recognized from screen-off handwriting (e.g., a screen-off memo) on a per-user basis. For example, the electronic device 500 may generate training data for text input.

According to an embodiment, a processor (e.g., the processor 120 in FIG. 4) may create (e.g., generate) a document (e.g., electronic text or an electronic document) including text. For example, the processor (e.g., the processor 120 in FIG. 4) may store the document (e.g., the electronic text or the electronic document) including the text in the database 720 (e.g., the memory 130 in FIG. 4). However, the disclosure is not limited thereto, and the processor (e.g., the processor 120 in FIG. 4) may store the document (e.g., the electronic document) including the text in an external electronic device or an external server (e.g., an AI server).

According to an embodiment, the processor (e.g., the processor 120 in FIG. 4) may collect text information used by the user to determine a written style or a spoken style used by the user. The processor (e.g., the processor 120 in FIG. 4) may collect the text information used by the user to determine which language is mainly used by the user. The processor (e.g., the processor 120 in FIG. 4) may display the user interface 710 on the display (e.g., the display 410 in FIG. 4) to guide the collection of the text information used by the user.

According to an embodiment, the processor (e.g., the processor 120 in FIG. 4) may learn the document (e.g., the electronic text or the electronic document) including the text, and the user's writing style, in order to personalize and supplement information recognized from screen-off handwriting (e.g., a screen-off memo) on a per-user basis. For example, the processor (e.g., the processor 120 in FIG. 4) may generate training data for text input.

According to an embodiment, the application 510 or the text recognition module 520 may create (e.g., generate) a document (e.g., electronic text or an electronic document) including text. For example, the application 510 or the text recognition module 520 may store the document (e.g., the electronic text or the electronic document) including the text in the database 720 (e.g., the memory 130 in FIG. 4). However, the disclosure is not limited thereto, and the application 510 or the text recognition module 520 may store the document (e.g., the electronic document) including the text in an external electronic device or an external server (e.g., an AI server).

According to an embodiment, the text recognition module 520 or the AI module 530 may collect text information used by the user to determine a written style or a spoken style used by the user. The text recognition module 520 or the AI module 530 may collect the text information used by the user to determine which language is mainly used by the user. The application 510 may display the user interface 710 on the display (e.g., the display 410 in FIG. 4) to guide the collection of the text information used by the user.

According to an embodiment, the AI module 530 may learn the document (e.g., the electronic text or the electronic document) including text, and the user's writing style, in order to personalize and supplement information recognized from screen-off handwriting (e.g., a screen-off memo) on a per-user basis. For example, text data input by the user may be used as input data of the AI module 530. The AI module 530 may learn the user's writing style based on the text data input by the user. For example, the AI module 530 may generate training data for text input.

According to an embodiment, the memory (e.g., the memory 130 in FIG. 4) may include (e.g., store) instructions for the electronic device 500 to perform operations in FIGS. 7 and 8.

According to an embodiment, the memory (e.g., the memory 130 in FIG. 4) may include (e.g., store) instructions for the processor 120 to perform the operations in FIGS. 7 and 8.

According to an embodiment, the memory (e.g., the memory 130 in FIG. 4) may include (e.g., store) instructions for the application 510 to perform the operations in FIGS. 7 and 8.

According to an embodiment, the memory (e.g., the memory 130 in FIG. 4) may include (e.g., store) instructions for the text recognition module 520 to perform the operations in FIGS. 7 and 8.

According to an embodiment, the memory (e.g., the memory 130 in FIG. 4) may include (e.g., store) instructions for the AI module 530 to perform the operations in FIGS. 7 and 8.

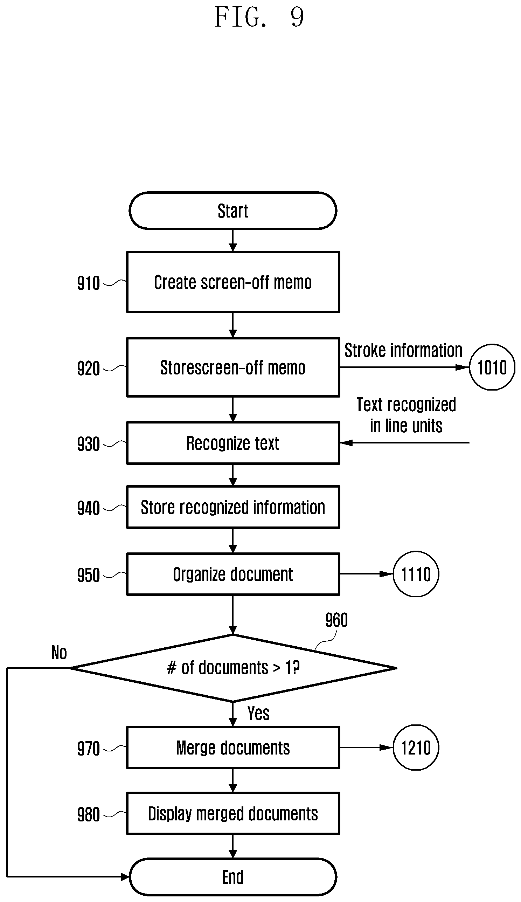

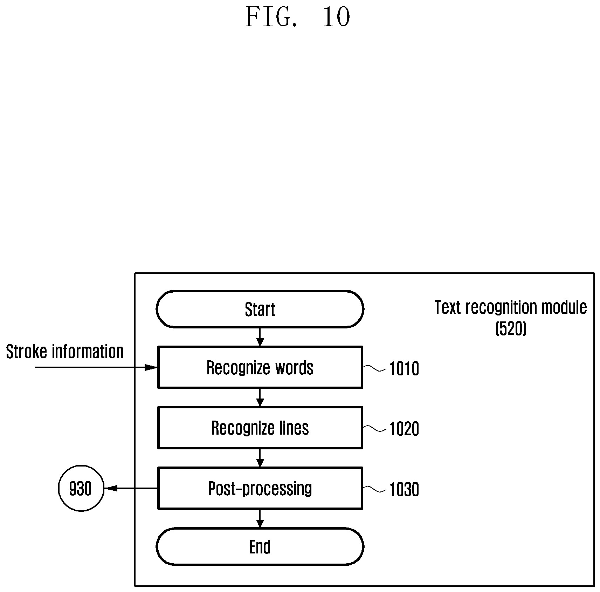

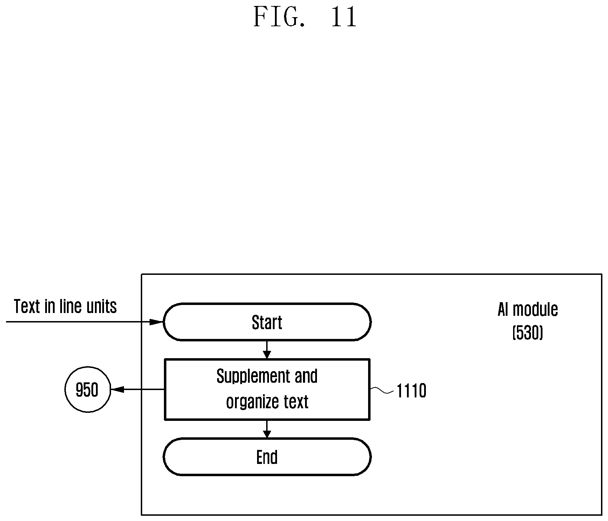

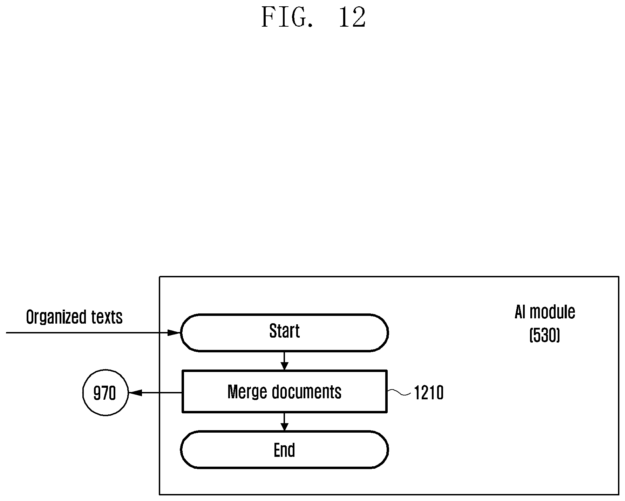

FIGS. 9 to 12 are diagrams illustrating an operating method of an electronic device according to an embodiment of the disclosure.

Referring to FIGS. 5 and 9 to 12, according to an embodiment, in operation 910, the electronic device 500 may create (e.g., obtain) screen-off handwriting (e.g., a screen-off memo) in a screen-off state (e.g., a state in which a screen is turned off).

For example, in operation 910, the processor (e.g., the processor 120 in FIG. 4) may create (e.g., obtain) screen-off handwriting (e.g., a screen-off memo) in a screen-off state (e.g., a state in which the screen is turned off).

For example, in operation 910, the application 510 or the text recognition module 520 may create (e.g., obtain) screen-off handwriting (e.g., a screen-off memo) in a screen-off state (e.g., a state in which the screen is turned off).

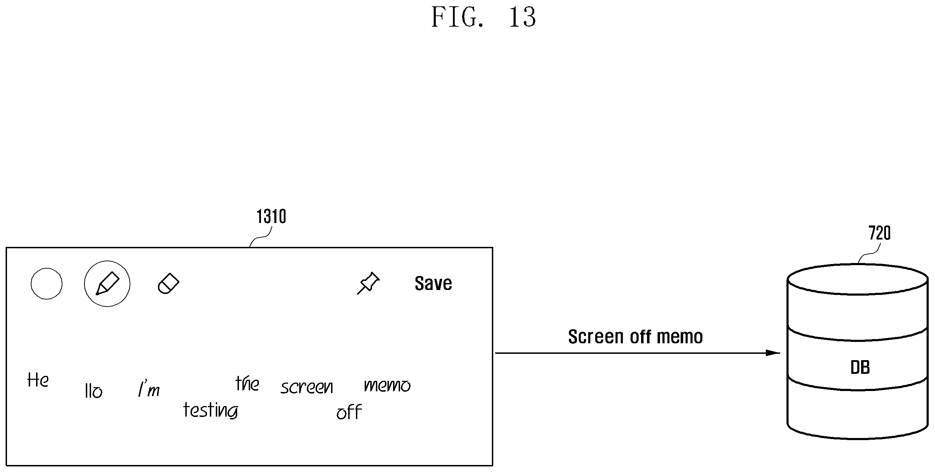

FIG. 13 is a diagram illustrating storing screen-off handwriting (e.g., a screen-off memo) and stroke information obtained from the screen-off handwriting in a database.

Referring to FIGS. 5, 9 to 12, and 13, according to an embodiment, in operation 920, the electronic device 500 may obtain stroke information from the screen-off handwriting (e.g., the screen-off memo). Thereafter, the electronic device 500 may store the screen-off handwriting 1310 (e.g., the screen-off memo) in the database 720 (e.g., the memory 130 in FIG. 4). However, the disclosure is not limited thereto, and the electronic device 500 may store the screen-off handwriting 1310 (e.g., the screen-off memo) in an external electronic device or an external server (e.g., an AI server).

For example, in operation 920, the processor 120 may store the screen-off handwriting 1310 (e.g., the screen-off memo) in the database 720 (e.g., the memory 130 in FIG. 4). However, the disclosure is not limited thereto, and the processor 120 may store the screen-off handwriting 1310 (e.g., the screen-off memo) in an external electronic device or an external server (e.g., an AI server). The electronic device 500 may provide the stroke information obtained from the screen-off handwriting (e.g., a screen-off memo) to the text recognition module 520.

For example, in operation 920, the processor 120 may obtain the stroke information from the screen-off handwriting (e.g., the screen-off memo). Thereafter, the application 510 or the text recognition module 520 may store the screen-off handwriting 1310 (e.g., the screen-off memo) in the database 720 (e.g., the memory 130 in FIG. 4). However, the disclosure is not limited thereto, and the application 510 or the text recognition module 520 may store the screen-off handwriting 1310 (e.g., a screen-off memo) in an external electronic device or an external server (e.g., an AI server). The processor 120 may provide the stroke information obtained from the screen-off handwriting (e.g., the screen-off memo) to the text recognition module 520.

After operation 920 is performed, operation 1010 may be performed.

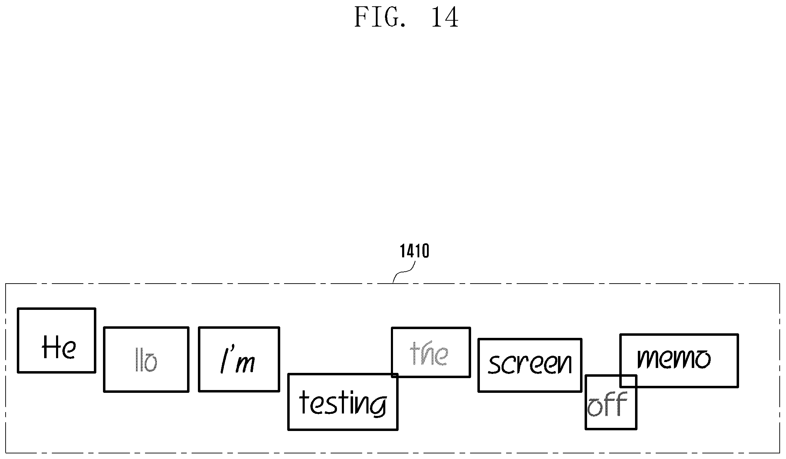

FIG. 14 is a diagram illustrating recognizing words in screen-off handwriting (e.g., a screen-off memo).

Referring to FIGS. 5, 9 to 12, and 14, according to an embodiment, in operation 1010, the electronic device 500 may recognize words 1410 from the screen-off handwriting (e.g., the screen-off memo) using the stroke information.

For example, in operation 1010, the processor 120 may recognize the words 1410 from the screen-off handwriting (e.g., the screen-off memo) using the stroke information.

For example, in operation 1010, the text recognition module 520 may recognize the words 1410 from the screen-off handwriting (e.g., the screen-off memo) using the stroke information.

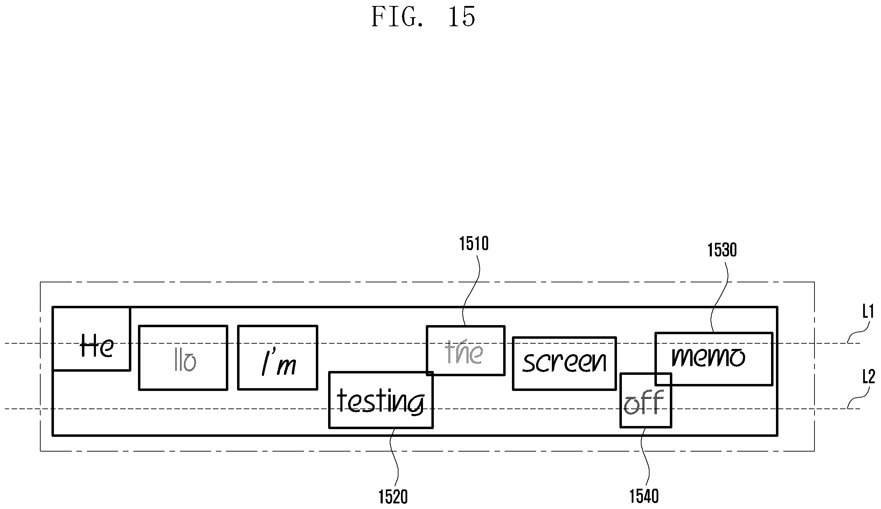

FIG. 15 is a diagram illustrating recognizing lines in screen-off handwriting (e.g., a screen-off memo).

Referring to FIGS. 5, 9 to 12, and 15, according to an embodiment, in operation 1020, the electronic device 500 may recognize lines L1 and L2 in which the words of the screen-off handwriting (e.g., the screen-off memo) are written. The electronic device 500 may distinguishably recognize words written in a first line L1 and words written in a second line L2.

For example, in operation 1020, the processor 120 may recognize the lines L1 and L2 in which the words of the screen-off handwriting (e.g., the screen-off memo) are written. The processor 120 may distinguishably recognize words written in the first line L1 and words written in the second line L2.

For example, in operation 1020, the text recognition module 520 may recognize the lines L1 and L2 in which the words of the screen-off handwriting (e.g., the screen-off memo) are written. The text recognition module 520 may distinguishably recognize words written in the first line L1 and words written in the second line L2.

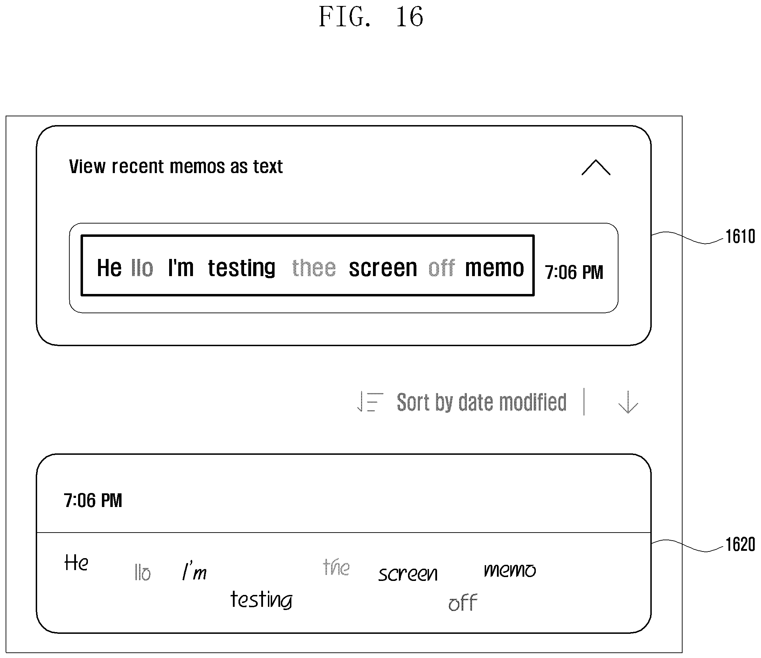

FIG. 16 is a diagram illustrating a line recognition result of screen-off handwriting (e.g., a screen-off memo).

Describing in conjunction with FIGS. 15 and 16, according to an embodiment, since a word "the" 1510 written in the first line L1 and a word "testing" 1520 written in the second line L2 at least partially overlap each other, the electronic device 500 may recognize that the word "the" 1510 and the word "testing" 1520 are written in the same line. Similarly, since a word "memo" 1530 written in the first line L1 and a word "off" 1540 written in the second line L2 at least partially overlap each other, the electronic device 500 may recognize that the word "memo" 1530 and the word "off" 1540 are written in the same line. By reflecting such line recognition results, the electronic device 500 may recognize that words 1620 of the screen-off handwriting (e.g., the screen-off memo) originally written across two lines are intended to be in the same line, and may arrange the words in a single line to display them through a user interface as in 1610.

According to an embodiment, since the word "the" 1510 written in the first line L1 and the word "testing" 1520 written in the second line L2 at least partially overlap each other, the processor 120 may recognize that the word "the" 1510 and the word "testing" 1520 are written in the same line. Similarly, since the word "memo" 1530 written in the first line L1 and the word "off" 1540 written in the second line L2 at least partially overlap each other, the processor 120 may recognize that the word "memo" 1530 and the word "off" 1540 are written in the same line. By reflecting such line recognition results, the processor 120 may recognize that words 1620 of the screen-off handwriting (e.g., the screen-off memo) originally written across two lines are intended to be in the same line, and may arrange the words in a single line to display them through the user interface as in 1610.

According to an embodiment, since the word "the" 1510 written in the first line L1 and the word "testing" 1520 written in the second line L2 at least partially overlap each other, the text recognition module 520 may recognize that the word "the" 1510 and the word "testing" 1520 are written in the same line. Similarly, since the word "memo" 1530 written in the first line L1 and the word "off" 1540 written in the second line L2 at least partially overlap each other, the text recognition module 520 may recognize that the word "memo" 1530 and the word "off" 1540 are written in the same line. By reflecting such line recognition results, the text recognition module 520 may recognize that words 1620 of the screen-off handwriting (e.g., the screen-off memo) originally written across two lines are intended to be in the same line, and may arrange the words in a single line to display them through the user interface as in 1610.

According to an embodiment, the electronic device 500 may receive a user input regarding the text 1610 changed from the handwriting memo 1620. For example, upon receiving the user input in a user interface that displays the text, the electronic device 500 may change the user interface to display the handwriting memo 1620 corresponding to the text.

According to an embodiment, the processor 120 may receive a user input regarding the text 1610 changed from the handwriting memo 1620. For example, upon receiving the user input in a user interface that displays the text, the processor 120 may change the user interface to display the handwriting memo 1620 corresponding to the text.

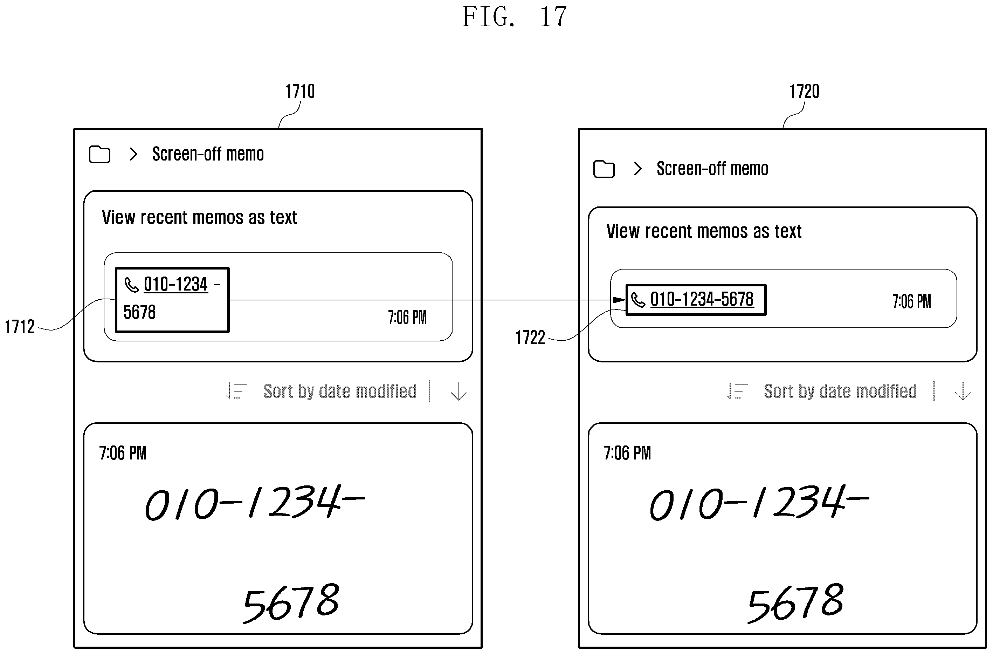

FIG. 17 is a diagram illustrating a post-processing result of an electronic device according to an embodiment of the disclosure.

Referring to FIGS. 5, 9 to 12, and 17, according to an embodiment, in operation 1030, the electronic device 500 may perform post-processing to analyze the words of the screen-off handwriting (e.g., the screen-off memo) and generate (e.g., obtain) information in a specified format. After line recognition, the electronic device 500 may determine (e.g., confirm) whether it can generate meaningful information in a specified format (e.g., phone number, link, address, e-mail) by combining with another line. The electronic device 500 may obtain a phone number 1712 from the screen-off handwriting (e.g., the screen-off memo). In this case, if the phone number 1712 of the screen-off handwriting (e.g., the screen-off memo) is written on two lines, the electronic device 500 may determine whether it corresponds to information in a specified format by concatenating the corresponding line and the next line. If it corresponds to information in a specified format by concatenating the corresponding line and the next line, the electronic device 500 may convert it into a phone number 1722 of single-line electronic text. The electronic device 500 may assign an application action attribute to the phone number 1722 of the text so that a phone application is executed to make a call when the phone number 1722 of the text is selected. The electronic device 500 may store the phone number 1712 of the screen-off handwriting (e.g., the screen-off memo) and the phone number 1722 of the single-line electronic text in a database (e.g., the database 720 in FIG. 13).

According to an embodiment, in operation 1030, the processor (e.g., the processor 120 in FIG. 4) may perform post-processing to analyze the words of the screen-off handwriting (e.g., the screen-off memo) and generate (e.g., obtain) information in a specified format. After line recognition, the processor 120 may determine (e.g., confirm) whether it can generate meaningful information in a specified format (e.g., phone number, link, address, e-mail) by combining with another line. The processor 120 may obtain a phone number 1712 from the screen-off handwriting (e.g., the screen-off memo). In this case, if the phone number 1712 of the screen-off handwriting (e.g., the screen-off memo) is written on two lines, the processor 120 may determine whether it corresponds to information in a specified format by concatenating the corresponding line and the next line. If it corresponds to information in a specified format by concatenating the corresponding line and the next line, the processor 120 may convert it into a phone number 1722 of single-line electronic text. The processor 120 may assign an application action attribute to the phone number 1722 of the text so that a phone application is executed to make a call when the phone number 1722 of the text is selected. The processor 120 may store the phone number 1712 of the screen-off handwriting (e.g., the screen-off memo) and the phone number 1722 of the single-line electronic text in a database (e.g., the database 720 in FIG. 13).

According to an embodiment, in operation 1030, the text recognition module (e.g., the text recognition module 520 in FIG. 5) may perform post-processing to analyze the words of the screen-off handwriting (e.g., the screen-off memo) and generate (e.g., obtain) information in a specified format. After line recognition, the text recognition module 520 may determine (e.g., confirm) whether it can generate meaningful information in a specified format (e.g., phone number, link, address, e-mail) by combining with another line. The text recognition module 520 may obtain a phone number 1712 from the screen-off handwriting (e.g., the screen-off memo). In this case, if the phone number 1712 of the screen-off handwriting (e.g., the screen-off memo) is written on two lines, the text recognition module 520 may determine whether it corresponds to information in a specified format by concatenating the corresponding line and the next line. If it corresponds to information in a specified format by concatenating the corresponding line and the next line, the text recognition module 520 may convert it into a phone number 1722 of single-line electronic text. The text recognition module 520 may assign an application action attribute to the phone number 1722 of the text so that a phone application is executed to make a call when the phone number 1722 of the text is selected. The text recognition module 520 may store the phone number 1712 of the screen-off handwriting (e.g., the screen-off memo) and the phone number 1722 of the single-line electronic text in a database (e.g., the database 720 in FIG. 13).

After operation 1030 is performed, operation 930 may be performed.

According to an embodiment, in operation 930, the electronic device 500 may obtain the stroke information from the screen-off handwriting (e.g., the screen-off memo). Using the stroke information, the electronic device 500 may recognize the screen-off handwriting (e.g., the screen-off memo) as text (e.g., electronic text or an electronic document). In this case, the electronic device 500 may obtain the text recognized in line units and information of the text. The electronic device 500 may create (e.g., generate) a document (e.g., an electronic document) including the text.

According to an embodiment, in operation 930, the processor 120 may obtain the stroke information from the screen-off handwriting (e.g., the screen-off memo). Using the stroke information, the processor 120 may recognize the screen-off handwriting (e.g., the screen-off memo) as text (e.g., electronic text or an electronic document). In this case, the processor 120 may obtain the text recognized in line units and information of the text. The processor 120 may write (e.g., generate) a document (e.g., an electronic document) including the text.

According to an embodiment, in operation 930, the text recognition module 520 may obtain the stroke information from the screen-off handwriting (e.g., the screen-off memo). Using the stroke information, the text recognition module 520 may recognize the screen-off handwriting (e.g., the screen-off memo) as text (e.g., electronic text or an electronic document). In this case, the text recognition module 520 may obtain the text recognized in line units and information of the text. The text recognition module 520 may write (e.g., generate) a document (e.g., an electronic document) including the text.

According to an embodiment, in operation 940, the electronic device 500 may store information of the recognized text in a database (e.g., the database 720 in FIG. 7).

According to an embodiment, in operation 940, the processor 120 may store information of the recognized text in a database (e.g., the database 720 in FIG. 7).

According to an embodiment, in operation 940, the text recognition module 520 may store information of the recognized text in a database (e.g., the database 720 in FIG. 7).

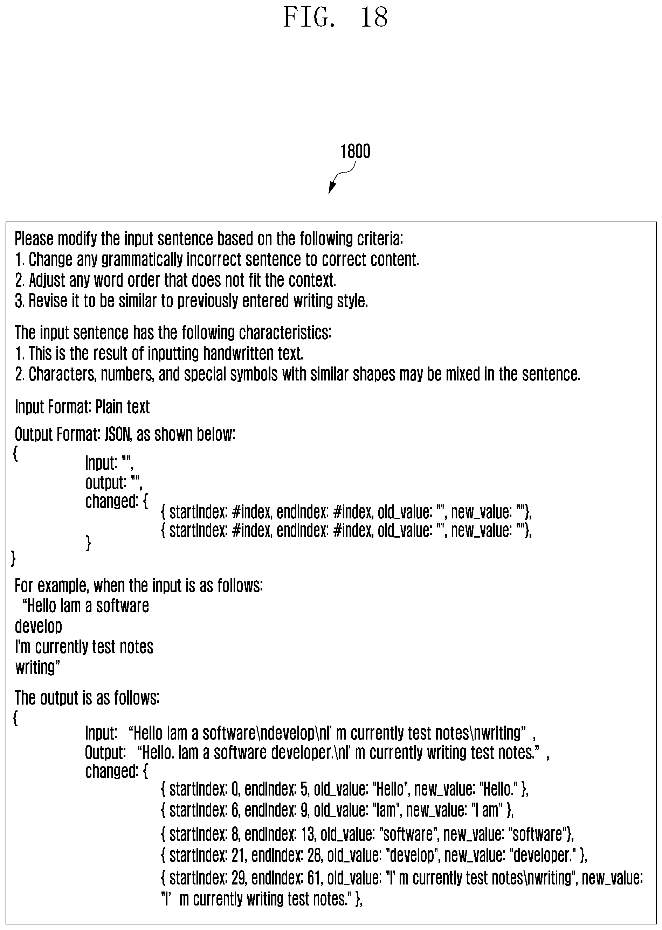

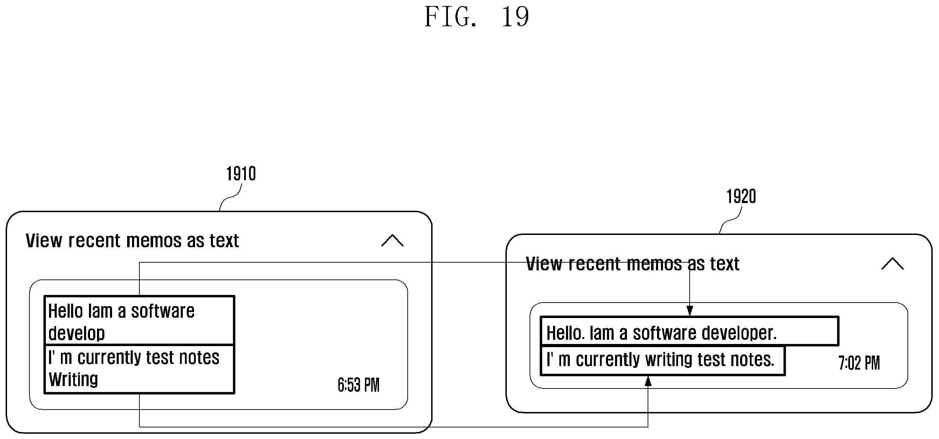

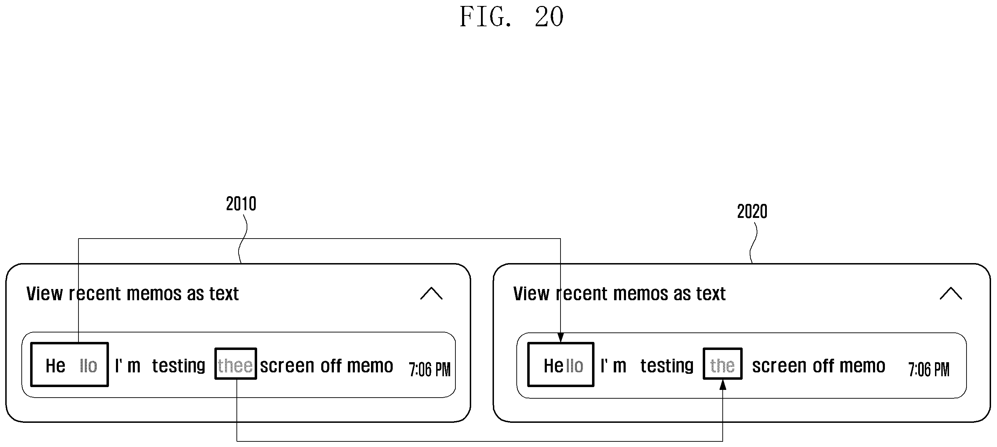

FIG. 18 is a diagram illustrating an example of using a prompt for document organization of an electronic device according to an embodiment of the disclosure. FIG. 19 is a diagram illustrating a document organization result of an electronic device according to an embodiment of the disclosure. FIG. 20 is a diagram illustrating a document organization result of an electronic device according to an embodiment of the disclosure.

Describing in conjunction with FIGS. 18 to 20, according to an embodiment, in operation 950, the electronic device 500 may check for errors (e.g., typos, spacing, word order, or grammatical errors) in the text recognized through post-processing and organize the document by correcting the text errors.

For example, the electronic device 500 may transmit a prompt 1800 as illustrated in FIG. 18 to the AI module 530 to check for errors (e.g., typos, spacing, word order, or grammatical errors) in the text and organize the document by correcting the text errors.

For example, if words included in the text have grammatical errors or include words that do not fit the context, the electronic device 500 may organize the document by correcting the text errors.

For example, if words included in the text differ from a writing style previously used by the user, the electronic device 500 may organize the document by correcting the words included in the text to match the writing style previously used by the user.

In operation 950, the processor 120 may check for errors (e.g., typos, spacing, word order, or grammatical errors) in the text recognized through post-processing and organize the document by correcting the text errors.

For example, the processor 120 may transmit the prompt 1800 as illustrated in FIG. 18 to the AI module 530 to check for errors (e.g., typos, spacing, word order, or grammatical errors) in the text and organize the document by correcting the text errors.

For example, if words included in the text have grammatical errors or include words that do not fit the context, the processor 120 may organize the document by correcting the text errors.

For example, if words included in the text differ from a writing style previously used by the user, the processor 120 may organize the document by correcting the words included in the text to match the writing style previously used by the user.

After operation 950 is performed, operation 1110 may be performed.

As illustrated in FIG. 19, in operation 1110, the electronic device 500 may supplement and organize the text. For example, if words 1910 contained in the text 2010 are written on two lines, the electronic device 500 may correct them into single-line content and generate corrected text 1920. The electronic device 500 may display the corrected text 1920 through a display (e.g., the display 410 in FIG. 4).

As illustrated in FIG. 20, in operation 1110, if the words "He llo I'm testing thee screen off memo" contained in the text 2010 have a typo error and/or a spacing error, the electronic device 200 may correct them to "Hello I'm testing the screen off memo" and generate corrected text 2020 (e.g., electronic text or an electronic document). The electronic device 500 may display the corrected text 2020 through the display 410.

As illustrated in FIG. 19, in operation 1110, if words 1910 contained in the text 2010 are written on two lines, the processor 120 may correct them into single-line content and generate corrected text 1920. The processor 120 may display the corrected text 1920 through a display (e.g., the display 410 in FIG. 4).

As illustrated in FIG. 20, in operation 1110, if the words "He llo I'm testing thee screen off memo" contained in the text 2010 have a typo and a spacing error, the processor 120 may correct them to "Hello I'm testing the screen off memo" and generate corrected text 2020 (e.g., electronic text or an electronic document). The processor 120 may display the corrected text 2020 through the display 410.

After operation 950 and operation 1110, operation 960 may be performed.

According to an embodiment, in operation 960, the electronic device 500 may determine whether the text corrected by the AI module 530 exceeds one (e.g., is two or more).

As a result of the determination in operation 960, if the text corrected by the AI module 530 exceeds one (e.g., is two or more), the electronic device 500 may perform operation 970.

According to an embodiment, in operation 970, the electronic device 500 may merge the two or more pieces of text into one piece of text.

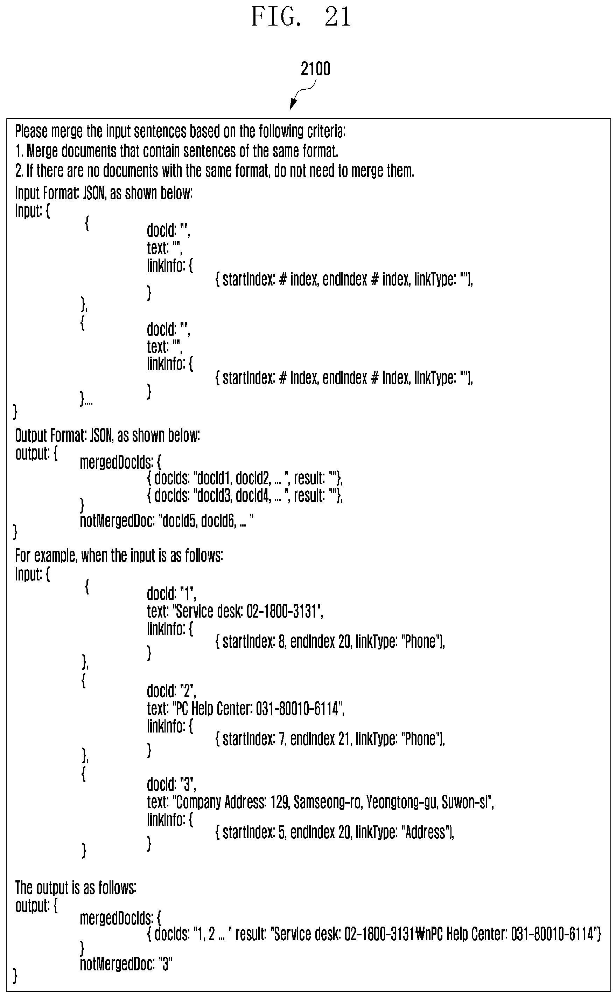

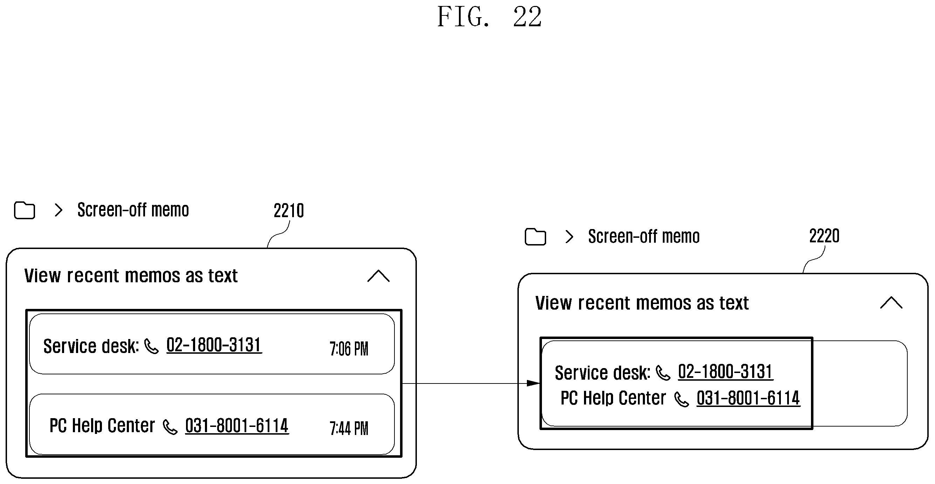

FIG. 21 is a diagram illustrating an example of using a prompt for document merging of an electronic device according to an embodiment of the disclosure. FIG. 22 is a diagram illustrating a document merging result of an electronic device according to an embodiment of the disclosure.

Describing in conjunction with FIGS. 21 and 22, if there are two or more pieces of text 2210 corrected by the AI module 530, the electronic device 500 may transmit a prompt 2100 as illustrated in FIG. 21 to the AI module 530.

According to an embodiment, in operation 960, the processor 120 may determine whether the text corrected by the AI module 530 exceeds one (e.g., is two or more).

As a result of the determination in operation 960, if the text corrected by the AI module 530 exceeds one (e.g., is two or more), the processor 120 may perform operation 970.

According to an embodiment, in operation 970, the processor 120 may merge the two or more pieces of text into a single piece of text.

Describing in conjunction with FIGS. 21 and 22, if there are two or more pieces of text 2210 corrected by the AI module 530, the processor 120 may transmit a prompt 2100 as illustrated in FIG. 21 to the AI module 530.

According to an embodiment, in operation 1210, the AI module 530 may perform an operation based on the prompt 2100 and determine whether the two or more pieces of text 2210 include a specified format (e.g., e-mail, phone number, address). If the two or more pieces of text 2210 include a specified format (e.g., e-mail, phone number, address), the AI module 530 may merge the two or more pieces of text 2210 into a single piece of text 2220.

For example, the AI module 530 may perform an operation based on the prompt 2100 to analyze the similarity of the two or more pieces of text 2210, and if the two or more pieces of text 2210 are similar, merge them into a single piece of text 2220.

For example, if the two or more pieces of text 2210 include a phone number in a specified format, the AI module 530 may merge the two or more phone number texts into a single phone number text.

For example, if the two or more pieces of text 2210 include an e-mail in a specified format, the AI module 530 may merge the two or more e-mail texts into a single e-mail text.

For example, if the two or more pieces of text 2210 include an address in a specified format, the AI module 530 may merge the two or more address texts into a single address text.

According to an embodiment, in operation 980, the electronic device 500 may display the merged single piece of text 2220 through the display 410.

According to an embodiment, in operation 980, the processor 120 may display the merged single piece of text 2220 through the display 410.

According to an embodiment, in operation 980, the application 510 may display the merged single piece of text 2220 through the display 410.

According to an embodiment, the electronic device 500 may apply a color matched to a previously recognized word to the organized content and supplemented content of the text, so that the user can verify the organized content and the supplemented content of the text. The electronic device 500 may assign link information to the organized content and the supplemented content of the text, so that the user can verify the organized content and the supplemented content of the text.

According to an embodiment, the processor 120 may apply a color matched to a previously recognized word to the organized content and the supplemented content of the text, so that the user can verify the organized content and the supplemented content of the text. The processor 120 may assign link information to the organized content and the supplemented content of the text, so that the user can verify the organized content and the supplemented content of the text.

According to an embodiment, the application 510 may apply a color matched to a previously recognized word to the organized content and the supplemented content of the text, so that the user can verify the organized content and the supplemented content of the text. The application 510 may assign link information to the organized content and the supplemented content of the text, so that the user can verify the organized content and the supplemented content of the text.

According to an embodiment, the memory (e.g., the memory 130 in FIG. 4) may include (e.g., store) instructions for the electronic device 500 to perform the operations in FIGS. 9 to 12.

According to an embodiment, the memory (e.g., the memory 130 in FIG. 4) may include (e.g., store) instructions for the electronic device 500 to perform the operations in FIGS. 13 to 22.

According to an embodiment, the memory (e.g., the memory 130 in FIG. 4) may include (e.g., store) instructions for the processor 120 to perform the operations in FIGS. 9 to 12.

According to an embodiment, the memory (e.g., the memory 130 in FIG. 4) may include (e.g., store) instructions for the processor 120 to perform the operations in FIGS. 13 to 22.

According to an embodiment, the memory (e.g., the memory 130 in FIG. 4) may include (e.g., store) instructions for the application 510 to perform the operations in FIGS. 9 to 12.

According to an embodiment, the memory (e.g., the memory 130 in FIG. 4) may include (e.g., store) instructions for the application 510 to perform the operations in FIGS. 13 to 22.

According to an embodiment, the memory (e.g., the memory 130 in FIG. 4) may include (e.g., store) instructions for the text recognition module 520 to perform the operations in FIGS. 9 to 12.

According to an embodiment, the memory (e.g., the memory 130 in FIG. 4) may include (e.g., store) instructions for the text recognition module 520 to perform the operations in FIGS. 13 to 22.

According to an embodiment, the memory (e.g., the memory 130 in FIG. 4) may include (e.g., store) instructions for the AI module 530 to perform the operations in FIGS. 9 to 12.

According to an embodiment, the memory (e.g., the memory 130 in FIG. 4) may include (e.g., store) instructions for the AI module 530 to perform the operations in FIGS. 13 to 22.

For example, at least some of the operations in FIGS. 9 to 12 may be omitted. For example, the operations in FIGS. 9 to 12 may be performed sequentially. For example, at least some of the operations in FIGS. 9 to 12 may be performed simultaneously (e.g., in parallel).

For example, at least some of the operations in FIGS. 13 to 22 may be omitted. For example, the operations in FIGS. 13 to 22 may be performed sequentially. For example, at least some of the operations in FIGS. 13 to 22 may be performed simultaneously (e.g., in parallel).

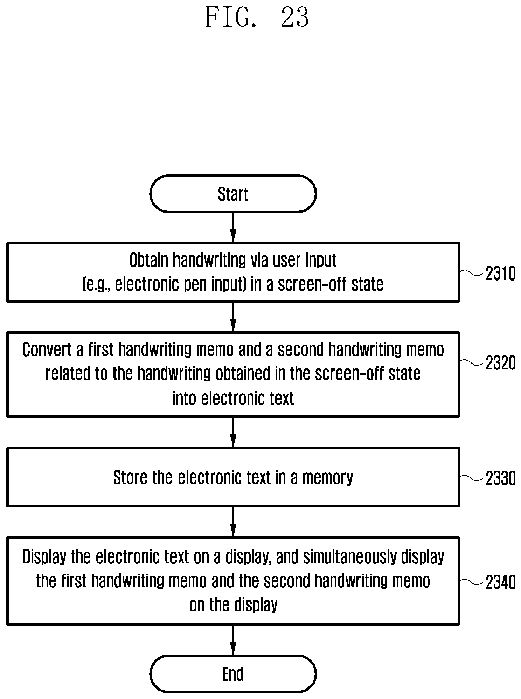

FIG. 23 is a diagram illustrating an operating method of an electronic device according to an embodiment of the disclosure.

Referring to FIGS. 4 and 23, according to an embodiment, in operation 2310, the electronic device 400 may obtain a user's handwriting via a user input (e.g., an electronic pen input) in a screen-off state of the display 410 (e.g., obtain the handwriting written on the display).

According to an embodiment, in operation 2310, the processor 120 may obtain a user's handwriting via a user input (e.g., an electronic pen input) in a screen-off state of the display 410 (e.g., obtain the handwriting written on the display).

According to an embodiment, in operation 2320, the electronic device 400 may obtain a first handwriting memo and a second handwriting memo related to the handwriting obtained in the screen-off state of the display 410. The electronic device 400 may convert the first handwriting memo and the second handwriting memo into electronic text.

According to an embodiment, in operation 2320, the processor 120 may obtain a first handwriting memo and a second handwriting memo related to the handwriting obtained in the screen-off state of the display 410. The electronic device 400 may convert the first handwriting memo and the second handwriting memo into electronic text.

According to an embodiment, in operation 2330, the electronic device 400 may store the electronic text in the memory 130 (e.g., a database, a server).

According to an embodiment, in operation 2330, the processor 120 may store the electronic text in the memory 130 (e.g., a database, a server).

According to an embodiment, in operation 2340, the electronic device 400 may display the electronic text on the display 410. At the same time, the electronic device 400 may display the first handwriting memo and the second handwriting memo on the display 410.

According to an embodiment, in operation 2340, the processor 120 may display the electronic text on the display 410. At the same time, the processor 120 may display the first handwriting memo and the second handwriting memo on the display 410.

According to an embodiment, the memory (e.g., the memory 130 in FIG. 4) may include (e.g., store) instructions for the electronic device 400 to perform the operations in FIG. 23.

According to an embodiment, the memory (e.g., the memory 130 in FIG. 4) may include (e.g., store) instructions for the processor 120 to perform the operations in FIG. 23.

For example, at least some of the operations in FIG. 23 may be omitted. For example, the operations in FIG. 23 may be performed sequentially. For example, at least some of the operations in FIG. 23 may be performed simultaneously (e.g., in parallel).

An electronic device (e.g., the electronic device 200 in FIGS. 2 and 3, the electronic device 400 in FIG. 4, the electronic device 500 in FIG. 5) according to an embodiment of the disclosure may include a display module (e.g., the display module 160 in FIG. 4), a processor (e.g., the processor 120 in FIG. 4), and a memory (e.g., the memory 130 in FIG. 4). The display module 160 may be configured to obtain a user's handwriting via a user input (e.g., the electronic pen 300 in FIGS. 2 and 3) in a screen-off state. The processor 120 may be configured to control an operation of the display module 160. The memory 130 may include a first handwriting memo and a second handwriting memo related to the handwriting obtained in the screen-off state, and may be operatively connected to the processor 120 and include instructions. When the instructions are executed by the processor 120, the electronic device 200, 400, or 500 may be configured to generate the first handwriting memo and the second handwriting memo related to the handwriting obtained in the screen-off state as electronic texts. When the instructions are executed by the processor 120, the electronic device 200, 400, or 500 may be configured to store the electronic texts in the memory 130. When the instructions are executed by the processor 120, the electronic device 200, 400, or 500 may be configured to display the electronic texts simultaneously with the first handwriting memo and the second handwriting memo on the display module 160.

According to an embodiment, when the instructions are executed by the processor 120, the electronic device 200, 400, or 500 may be configured to group objects of the handwriting existing on a same line. When the instructions are executed by the processor 120, the electronic device 200, 400, or 500 may be configured to generate the objects of the handwriting as the electronic text for each line.

According to an embodiment, when the instructions are executed by the processor 120, the electronic device 200, 400, or 500 may be configured to learn the user's handwriting and writing style. When the instructions are executed by the processor 120, the electronic device 200, 400, or 500 may be configured to generate the electronic texts by reflecting a result of the learning.

According to an embodiment, when the instructions are executed by the processor 120, the electronic device 200, 400, or 500 may be configured to generate the electronic texts by correcting grammatical errors and sentence context errors in the handwriting.

According to an embodiment, when the instructions are executed by the processor 120, the electronic device 200, 400, or 500 may be configured to determine a similarity between the first handwriting memo and the second handwriting memo. When the instructions are executed by the processor 120, the electronic device 200, 400, or 500 may be configured to merge the first handwriting memo and the second handwriting memo into a single electronic text if the first handwriting memo and the second handwriting memo satisfy a predetermined similarity criterion.

According to an embodiment, when the instructions are executed by the processor 120, the electronic device 200, 400, or 500 may be configured to, in case where the first handwriting memo and the second handwriting memo are written in a plurality of lines and include a predetermined format, generate the first handwriting memo and the second handwriting memo written in the plurality of lines as a single electronic text.

According to an embodiment, when the instructions are executed by the processor 120, the electronic device 200, 400, or 500 may be configured to assign an application action attribute to the electronic text so that an application associated with the electronic text is executable.

According to an embodiment, when the instructions are executed by the processor 120, the electronic device 200, 400, or 500 may be configured to display the electronic text over the first handwriting memo.

An operating method of an electronic device 200, 400, or 500, according to an embodiment of the disclosure, may obtain a user's handwriting written on a display 410 by a user input in a screen-off state. The operating method may convert a first handwriting memo and a second handwriting memo related to the handwriting obtained in the screen-off state into electronic texts. The operating method may store the electronic texts in the memory 130. The operating method may display the electronic texts simultaneously with the first handwriting memo and the second handwriting memo on the display 410.

According to an embodiment, the operating method may group objects of the handwriting existing on a same line by analyzing the handwriting. The operating method may generate the objects of the handwriting as the electronic text for each line.

According to an embodiment, the operating method may learn the user's handwriting and writing style. The operating method may generate the electronic texts by reflecting a result of the learning.

According to an embodiment, the operating method may generate the electronic texts by correcting grammatical errors and sentence context errors in the handwriting.

According to an embodiment, the operating method may determine a similarity between the first handwriting memo and the second handwriting memo. The operating method may merge the first handwriting memo and the second handwriting memo into a single electronic text if the first handwriting memo and the second handwriting memo satisfy a predetermined similarity criterion.

According to an embodiment, the operating method may, in case where the first handwriting memo and the second handwriting memo are written in a plurality of lines and include a predetermined format, generate the first handwriting memo and the second handwriting memo written in the plurality of lines as a single electronic text.

According to an embodiment, the operating method may assign an application action attribute to the electronic text so that an application associated with the electronic text is executable.

According to an embodiment, the operating method may display the electronic text over the first handwriting memo.

In a recording medium that stores instructions readable by a processor 120 of an electronic device 200, 400, or 500, the instructions may cause, when executed by the processor 120, the electronic device 200, 400, or 500 to obtain a user's handwriting written on a display 410 by a user input in a screen-off state. The instructions may cause, when executed by the processor 120, the electronic device 200, 400, or 500 to convert a first handwriting memo and a second handwriting memo related to the handwriting obtained in the screen-off state into electronic texts. The instructions may cause, when executed by the processor 120, the electronic device 200, 400, or 500 to store the electronic texts in the memory 130. The instructions may cause, when executed by the processor 120, the electronic device 200, 400, or 500 to display the electronic texts simultaneously with the first handwriting memo and the second handwriting memo on the display 410.

According to an embodiment, the instructions may cause, when executed by the processor 120, the electronic device 200, 400, or 500 to group objects of the handwriting existing on a same line by analyzing the handwriting. The instructions may cause, when executed by the processor 120, the electronic device 200, 400, or 500 to generate the objects of the handwriting as the electronic text for each line.

According to an embodiment, the instructions may cause, when executed by the processor 120, the electronic device 200, 400, or 500 to learn the user's handwriting and writing style. The instructions may cause, when executed by the processor 120, the electronic device 200, 400, or 500 to generate the electronic texts by reflecting a result of the learning.

According to an embodiment, in case where the first handwriting memo and the second handwriting memo are written in a plurality of lines and include a predetermined format, the instructions may cause, when executed by the processor 120, the electronic device 200, 400, or 500 to generate the first handwriting memo and the second handwriting memo written in the plurality of lines as a single electronic text.

An electronic device and an operating method thereof according to an embodiment of the disclosure may convert a screen-off handwriting memo into an electronic text document and store the electronic text document in a memory (e.g., a database or a server).

An electronic device and an operating method thereof according to an embodiment of the disclosure may convert a screen-off handwriting memo into an electronic text document and display the electronic text document on a display.

An electronic device and an operating method thereof according to an embodiment of the disclosure may convert screen-off memos into a plurality of electronic text documents and merge the plurality of electronic text documents.

An electronic device and an operating method thereof according to an embodiment of the disclosure may convert screen-off memos into a plurality of electronic text documents, and merge the plurality of electronic text documents and display them on a display.

The effects obtainable from the disclosure are not limited to those mentioned above, and other effects not mentioned herein will be clearly understood from the above description by a person skilled in the art to which the disclosure pertains.

## Claims

1. An electronic device (200, 400, 500) comprising:
a display module (160) configured to obtain a user's handwriting via a user input in a screen-off state;
a processor (120) configured to control an operation of the display module (160); and
a memory (130) operatively connected to the processor (120) and including instructions,
wherein the memory (130) includes a first handwriting memo and a second handwriting memo related to the handwriting obtained in the screen-off state of the display module, and
wherein when the instructions are executed by the processor (120), the electronic device (200, 400, 500) is configured to:
generate the first handwriting memo and the second handwriting memo related to the handwriting obtained in the screen-off state as electronic texts,
store the electronic texts in the memory (130), and
display the electronic texts simultaneously with the first handwriting memo and the second handwriting memo on the display module (160).

2. The electronic device (200, 400, 500) of claim 1, wherein when the instructions are executed by the processor (120), the electronic device (200, 400, 500) is configured to:
group objects of the handwriting existing on a same line, and
generate the objects of the handwriting as the electronic text for each line.

3. The electronic device (200, 400, 500) of claim 1 or 2, wherein when the instructions are executed by the processor (120), the electronic device (200, 400, 500) is configured to:
learn the user's handwriting and writing style, and
generate the electronic texts by reflecting a result of the learning.

4. The electronic device (200, 400, 500) of claim 3, wherein when the instructions are executed by the processor (120), the electronic device (200, 400, 500) is configured to:
generate the electronic texts by correcting grammatical errors and sentence context errors in the handwriting.

5. The electronic device (200, 400, 500) of any one of claims 1 to 4, wherein when the instructions are executed by the processor (120), the electronic device (200, 400, 500) is configured to:
determine a similarity between the first handwriting memo and the second handwriting memo, and
merge the first handwriting memo and the second handwriting memo into a single electronic text if the first handwriting memo and the second handwriting memo satisfy a predetermined similarity criterion.

6. The electronic device (200, 400, 500) of any one of claims 1 to 5, wherein when the instructions are executed by the processor (120), the electronic device (200, 400, 500) is configured to:
in case where the first handwriting memo and the second handwriting memo are written in a plurality of lines and include a predetermined format,
generate the first handwriting memo and the second handwriting memo written in the plurality of lines as a single electronic text.

7. The electronic device (200, 400, 500) of any one of claims 1 to 6, wherein when the instructions are executed by the processor (120), the electronic device (200, 400, 500) is configured to:
assign an application action attribute to the electronic text so that an application associated with the electronic text is executable.

8. The electronic device (200, 400, 500) of claim 1, wherein when the instructions are executed by the processor (120), the electronic device (200, 400, 500) is configured to:
display the electronic text over the first handwriting memo.

9. An operating method of an electronic device (200, 400, 500), comprising:
obtaining a user's handwriting written on a display (410) by a user input in a screen-off state;
converting a first handwriting memo and a second handwriting memo related to the handwriting obtained in the screen-off state into electronic texts;
storing the electronic texts in the memory (130); and
displaying the electronic texts simultaneously with the first handwriting memo and the second handwriting memo on the display (410).

10. The operating method of the electronic device (200, 400, 500) of claim 9, comprising:
grouping objects of the handwriting existing on a same line by analyzing the handwriting; and
generating the objects of the handwriting as the electronic text for each line.

11. The operating method of the electronic device (200, 400, 500) of claim 9 or 10, comprising:
learning the user's handwriting and writing style, and
generating the electronic texts by reflecting a result of the learning.

12. The operating method of the electronic device (200, 400, 500) of claim 11, comprising:
generating the electronic texts by correcting grammatical errors and sentence context errors in the handwriting.

13. The operating method of the electronic device (200, 400, 500) of any one of claims 9 to 12, comprising:
determining a similarity between the first handwriting memo and the second handwriting memo, and
merging the first handwriting memo and the second handwriting memo into a single electronic text if the first handwriting memo and the second handwriting memo satisfy a predetermined similarity criterion.

14. The operating method of the electronic device (200, 400, 500) of any one of claims 9 to 13, comprising:
in case where the first handwriting memo and the second handwriting memo are written in a plurality of lines and include a predetermined format,
generating the first handwriting memo and the second handwriting memo written in the plurality of lines as a single electronic text.

15. The operating method of the electronic device (200, 400, 500) of any one of claims 9 to 14, comprising:
assigning an application action attribute to the electronic text so that an application associated with the electronic text is executable.
